# EUROPEAN PATENT APPLICATION

(11) **EP 3 457 608 A1**
(43) Date of publication of application: **20.03.2019**
(21) Application number: 17795508.5
(22) Date of filing: 08.05.2017
(51) Int. Cl.: H04L 1/16

(54) **METHOD FOR TRANSMITTING HARQ FEEDBACK INFORMATION, UE UNIT, BASE STATION, AND SYSTEM**

(30) Priority: 10.05.2016 CN 201610306017
(71) Applicant: China Academy of Telecommunications Technology, Hai Dian District Beijing 100191 (CN)
(72) Inventor: SI, Qianqian, Beijing 100191 (CN); PAN, Xueming, Beijing 100191 (CN); GAO, Xuejuan, Beijing 100191 (CN); WANG, Jiaqing, Beijing 100191 (CN)
(74) Representative: Studio Torta S.p.A.
(86) International application number: PCT/CN2017/083479
(87) International publication number: WO 2017/193890

(57) **Abstract**

The present disclosure provides a method for transmitting HARQ feedback information, a UE, a base station and a system. The method includes: receiving, by a UE, indication information from a base station, the indication information being configured to indicate a transmission subframe for transmitting the HARQ feedback information in a carrier; generating, by the UE, the HARQ feedback information; and transmitting, by the UE, the HARQ feedback information to the base station within the transmission subframe.

## Description

### CROSS-REFERENCE TO RELATED APPLICATION

The present application claims a priority of the Chinese patent application No.201610306017.9 filed on May 10, 2016, which is incorporated herein by reference in its entirety.

### TECHNICAL FIELD

The present disclosure relates to the field of communication technology, in particular to a method for transmitting Hybrid Automatic Repeat reQuest (HARQ) feedback information, a User Equipment (UE), a base station and a system.

### BACKGROUND

Along with the development of the communication technology, a Long Term Evolution (LTE) system is capable of supporting the transmission on a non-licensed spectrum resource, so as to improve the user experience and extend a coverage range. Currently, a Licensed Assisted Access (LAA) mode has been defined, so as to enable the LTE system to support the transmission on the non-licensed spectrum resource. In the LAA mode, when a certain non-licensed carrier has been adopted by a UE, the UE must access to a licensed primary carrier at first, and the non-licensed carrier merely serves as a secondary carrier. However, in the current LAA mode, the transmission of HARQ feedback information has not been defined specifically yet. Hence, there is an urgent need to provide a scheme for transmitting the HARQ feedback information.

### SUMMARY

An object of the present disclosure is to provide a method for transmitting HARQ feedback information, a UE, a base station and a system, so as to achieve the transmission of the HARQ feedback information.

In one aspect, the present disclosure provides in some embodiments a method for transmitting HARQ feedback information, including: receiving, by a UE, indication information from a base station, the indication information being configured to indicate a transmission subframe for transmitting the HARQ feedback information in a carrier; generating, by the UE, the HARQ feedback information; and transmitting, by the UE, the HARQ feedback information to the base station within the transmission subframe.

In a possible embodiment of the present disclosure, the HARQ feedback information includes HARQ ACKnowledgement (ACK) feedback information or HARQ Non-ACKnowledgement (NACK) feedback information.

In a possible embodiment of the present disclosure, the indication information is uplink scheduling signaling for scheduling the transmission of a physical uplink channel.

In a possible embodiment of the present disclosure, the uplink scheduling signaling is configured to indicate through x bits whether the HARQ feedback information is to be transmitted within subframes scheduled by the uplink scheduling signal, where x is a positive integer greater than or equal to 1.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

In a possible embodiment of the present disclosure, the uplink scheduling signaling is configured to indicate that merely the HARQ feedback information is transmitted within the subframes scheduled by the uplink scheduling signal through a specific bit field setting.

In a possible embodiment of the present disclosure, the indication information is signaling for scheduling the transmission of the HARQ feedback information.

In a possible embodiment of the present disclosure, the signaling is configured to indicate through x bits whether the HARQ feedback information is to be transmitted within subframes scheduled by the signaling, where x is a positive integer greater than or equal to 1.

In a possible embodiment of the present disclosure, the generating, by the UE, the HARQ feedback information includes determining, by the UE, a size of a codebook for the HARQ feedback information, and generating the HARQ feedback information in accordance with the size of the codebook.

In a possible embodiment of the present disclosure, the determining, by the UE, the size of the codebook for the HARQ feedback information includes determining, by the UE, the size of the codebook for the HARQ feedback information in accordance with target information. The target information includes one or more of the quantity of downlink processes, the quantity of configured carriers, a Count Downlink Assignment Index (C-DAI) in a time domain, a Total Downlink Assignment Index (T-DAI), a predefined parameter, a size of a feedback window notified by the base station, the quantity of transmission blocks (TBs), and a C-DAI in both a frequency domain and a time domain.

In a possible embodiment of the present disclosure, the determining, by the UE, the size of the codebook for the HARQ feedback information in accordance with the target information includes determining, by the UE, the size of the codebook for the HARQ feedback information in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station.

In a possible embodiment of the present disclosure, the generating, by the UE, the HARQ feedback information in accordance with the size of the codebook includes: cascading, by the UE, feedback bits for at least one carrier in accordance with a carrier number to acquire the codebook, and generating the HARQ feedback information in accordance with the size of the codebook, the feedback bits for each carrier being ranked in accordance with a process number; or ranking, by the UE, HARQ feedback bits in accordance with the C-DAI in both the frequency domain and the time domain to acquire the codebook, and generating the HARQ feedback information in accordance with the size of the codebook; or cascading, by the UE, the feedback bits for at least one carrier in accordance with the carrier number to acquire the codebook, and generating the HARQ feedback information in accordance with the size of the codebook, the feedback bits for each carrier being ranked in accordance with the C-DAI in the time domain.

In a possible embodiment of the present disclosure, the receiving, by the UE, the indication information from the base station includes receiving, by the UE, a plurality of pieces of indication information from the base station on one or more carriers within a same downlink subframe, each piece of indication information being configured to indicate the transmission subframe for transmitting the HARQ feedback information in different carriers. The transmitting, by the UE, the HARQ feedback information to the base station within the transmission subframes includes transmitting, by the UE, the same HARQ feedback information to the base station within the transmission subframes on a plurality of carriers indicated by the plurality of pieces of indication information, or transmitting, by the UE, the HARQ feedback information to the base station within a specific transmission subframe, the specific transmission subframe including one or more subframes of the transmission subframes indicated by the plurality of pieces of indication information.

In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information.

In a possible embodiment of the present disclosure, the transmitting, by the UE, the HARQ feedback information to the base station within the special transmission subframe includes: selecting, by the UE, a transmission subframe, which belongs to a carrier preconfigured by the base station, from the transmission subframes indicated by the plurality of pieces of indication information, and transmitting the HARQ feedback information to the base station within the transmission subframe; or selecting, by the UE, a transmission subframe in a carrier with a minimum number from the transmission subframes indicated by the plurality of pieces of indication information, and transmitting the HARQ feedback information to the base station within the transmission subframe; or selecting, by the UE, one or more transmission subframes from the transmission subframes indicated by the plurality of pieces of indication information in accordance with a dynamic indicator from the base station, and transmitting the HARQ feedback information to the base station within the selected one or more transmission subframes.

In a possible embodiment of the present disclosure, the dynamic indicator is uplink scheduling signaling, and trigger signaling for the HARQ feedback information is carried in the uplink scheduling signaling.

In a possible embodiment of the present disclosure, the transmitting, by the UE, the HARQ feedback information to the base station within the transmission subframe includes performing, by the UE, Listen Before Talk (LBT) detection on the transmission subframe, and when the LBT detection is performed successfully, transmitting the HARQ feedback information to the base station within the transmission subframe.

In a possible embodiment of the present disclosure, the transmitting, by the UE, the HARQ feedback information to the base station within the transmission subframe includes transmitting, by the UE, merely the HARQ feedback information to the base station within the transmission subframe, or transmitting, by the UE, both the HARQ feedback information and uplink data to the base station within the transmission subframe.

In a possible embodiment of the present disclosure, when the UE transmits both the HARQ feedback information and the uplink data to the base station within the transmission subframe, the HARQ feedback information is mapped to symbols which are located at both sides of a pilot signal within the transmission subframe and configured to transmit the uplink data; or when the UE transmits both the HARQ feedback information and the uplink data to the base station within the transmission subframe, the HARQ feedback information and the uplink data are transmitted in a multiplexing manner; or when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

In a possible embodiment of the present disclosure, when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

In another aspect, the present disclosure provides in some embodiments a method for transmitting HARQ feedback information, including: transmitting, by a base station, indication information to a UE, the indication information being configured to indicate a transmission subframe for transmitting the HARQ feedback information in a carrier; and receiving, by the base station, the HARQ feedback information transmitted within the transmission subframe from the UE, the HARQ feedback information being generated by the UE.

In a possible embodiment of the present disclosure, the HARQ feedback information includes HARQ ACK feedback information or HARQ NACK feedback information. In a possible embodiment of the present disclosure, the indication information is uplink scheduling signaling for scheduling the transmission of a physical uplink channel.

In a possible embodiment of the present disclosure, the uplink scheduling signaling is configured to indicate through x bits whether the HARQ feedback information is to be transmitted within subframes scheduled by the uplink scheduling signal, where x is a positive integer greater than or equal to 1.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

In a possible embodiment of the present disclosure, the uplink scheduling signaling is configured to indicate that merely the HARQ feedback information is transmitted within the subframes scheduled by the uplink scheduling signal through a specific bit field setting.

In a possible embodiment of the present disclosure, the indication information is signaling for scheduling the transmission of the HARQ feedback information.

In a possible embodiment of the present disclosure, the signaling is configured to indicate through x bits whether the HARQ feedback information is to be transmitted within subframes scheduled by the signaling, where x is a positive integer greater than or equal to 1.

In a possible embodiment of the present disclosure, the UE is configured to determine a size of a codebook for the HARQ feedback information, and generate the HARQ feedback information in accordance with the size of the codebook.

In a possible embodiment of the present disclosure, the size of the codebook for the HARQ feedback information is determined by the UE in accordance with target information, and the target information includes one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

In a possible embodiment of the present disclosure, the size of the codebook for the HARQ feedback information is determined by the UE in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station.

In a possible embodiment of the present disclosure, the HARQ feedback information is generated through: cascading, by the UE, feedback bits for at least one carrier in accordance with a carrier number to acquire the codebook, and generating the HARQ feedback information in accordance with the size of the codebook, the feedback bits for each carrier being ranked in accordance with a process number; or ranking, by the UE, HARQ feedback bits in accordance with the C-DAI in both the frequency domain and the time domain to acquire the codebook, and generating the HARQ feedback information in accordance with the size of the codebook; or cascading, by the UE, the feedback bits for at least one carrier in accordance with the carrier number to acquire the codebook, and generating the HARQ feedback information in accordance with the size of the codebook, the feedback bits for each carrier being ranked in accordance with the C-DAI in the time domain.

In a possible embodiment of the present disclosure, the transmitting, by the base station, the indication information to the UE includes transmitting, by the base station, a plurality of pieces of indication information to the UE on one or more carriers within a same downlink subframe, each piece of indication information being configured to indicate the transmission subframe for transmitting the HARQ feedback information in different carriers. The receiving, by the base station, the HARQ feedback information transmitted within the transmission subframe from the UE includes receiving, by the base station, from the UE the same HARQ feedback information within the transmission subframes on a plurality of carriers indicated by the plurality of pieces of indication information, or receiving from the UE the HARQ feedback information within a specific transmission subframe, the specific transmission subframe including one or more subframes of the transmission subframes indicated by the plurality of pieces of indication information.

In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information.

In a possible embodiment of the present disclosure, the receiving, by the base station, from the UE the HARQ feedback information transmitted within the specific transmission subframe includes: receiving, by the base station, from the UE the HARQ feedback information transmitted within at least one transmission subframe, the at least one transmission subframe being a transmission subframe which is selected by the UE from the transmission subframes indicated by the plurality of pieces of indication information and which belongs to a carrier preconfigured by the base station; or receiving, by the base station, from the UE the HARQ feedback information transmitted within a transmission subframe, the transmission subframe being a transmission subframe in a carrier with a minimum number which is selected by the UE from the transmission subframes indicated by the plurality of pieces of indication information; receiving, by the base station, from the UE the HARQ feedback information transmitted within at least one transmission subframe, the at least one transmission subframe including one or more transmission subframes which are selected from the transmission subframes indicated by the plurality of pieces of indication information in accordance with a dynamic indicator from the base station. In a possible embodiment of the present disclosure, the dynamic indicator is uplink scheduling signaling, and trigger signaling for the HARQ feedback information is carried in the uplink scheduling signaling.

In a possible embodiment of the present disclosure, when the UE transmits the HARQ feedback information to the base station within the transmission subframe, the UE is configured to perform LBT detection on the transmission subframe, and when the LBT detection is performed successfully, transmit the HARQ feedback information to the base station within the transmission subframe.

In a possible embodiment of the present disclosure, the receiving, by the base station, the HARQ transmission information transmitted within the transmission subframe from the UE includes receiving, by the base station, the HARQ feedback information merely transmitted within the transmission subframe from the UE, or receiving, by the base station, both the HARQ feedback information and uplink data transmitted within the transmission subframe from the UE.

In a possible embodiment of the present disclosure, when the UE transmits both the HARQ feedback information and the uplink data to the base station within the transmission subframe, the HARQ feedback information is mapped to symbols which are located at both sides of a pilot signal within the transmission subframe and configured to transmit the uplink data; or when the UE transmits both the HARQ feedback information and the uplink data to the base station within the transmission subframe, the HARQ feedback information and the uplink data are transmitted in a multiplexing manner; or when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

In a possible embodiment of the present disclosure, when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

In yet another aspect, the present disclosure provides in some embodiments a UE, including: a reception module configured to receive indication information from a base station, the indication information being configured to indicate a transmission subframe for transmitting the HARQ feedback information in a carrier; a generation module configured to generate the HARQ feedback information; and a transmission module configured to transmit the HARQ feedback information to the base station within the transmission subframe.

In a possible embodiment of the present disclosure, the HARQ feedback information includes HARQ ACK feedback information or HARQ NACK feedback information. In a possible embodiment of the present disclosure, the indication information is uplink scheduling signaling for scheduling the transmission of a physical uplink channel.

In a possible embodiment of the present disclosure, the uplink scheduling signaling is configured to indicate through x bits whether the HARQ feedback information is to be transmitted within subframes scheduled by the uplink scheduling signal, where x is a positive integer greater than or equal to 1.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

In a possible embodiment of the present disclosure, the uplink scheduling signaling is configured to indicate that merely the HARQ feedback information is transmitted within the subframes scheduled by the uplink scheduling signal through a specific bit field setting.

In a possible embodiment of the present disclosure, the indication information is signaling for scheduling the transmission of the HARQ feedback information.

In a possible embodiment of the present disclosure, the signaling is configured to indicate through x bits whether the HARQ feedback information is to be transmitted within subframes scheduled by the signaling, where x is a positive integer greater than or equal to 1.

In a possible embodiment of the present disclosure, the generation module is further configured to determine a size of a codebook for the HARQ feedback information, and generate the HARQ feedback information in accordance with the size of the codebook.

In a possible embodiment of the present disclosure, the generation module is further configured to determine the size of the codebook for the HARQ feedback information in accordance with target information. The target information includes one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

In a possible embodiment of the present disclosure, the generation module is further configured to determine the size of the codebook for the HARQ feedback information in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station.

In a possible embodiment of the present disclosure, the generation module is further configured to: cascade feedback bits for at least one carrier in accordance with a carrier number to acquire the codebook, and generate the HARQ feedback information in accordance with the size of the codebook, the feedback bits for each carrier being ranked in accordance with a process number; or rank HARQ feedback bits in accordance with the C-DAI in both the frequency domain and the time domain to acquire the codebook, and generate the HARQ feedback information in accordance with the size of the codebook; or cascade the feedback bits for at least one carrier in accordance with the carrier number to acquire the codebook, and generate the HARQ feedback information in accordance with the size of the codebook, the feedback bits for each carrier being ranked in accordance with the C-DAI in the time domain.

In a possible embodiment of the present disclosure, the reception module is further configured to receive a plurality of pieces of indication information from the base station on one or more carriers within a same downlink subframe, each piece of indication information being configured to indicate the transmission subframe for transmitting the HARQ feedback information in different carriers. The transmission module is further configured to transmit the same HARQ feedback information to the base station within the transmission subframes on a plurality of carriers indicated by the plurality of pieces of indication information, or transmit the HARQ feedback information to the base station within a specific transmission subframe, the specific transmission subframe including one or more subframes of the transmission subframes indicated by the plurality of pieces of indication information.

In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information.

In a possible embodiment of the present disclosure, the transmission module is further configured to: select a transmission subframe, which belongs to a carrier preconfigured by the base station, from the transmission subframes indicated by the plurality of pieces of indication information, and transmit the HARQ feedback information to the base station within the transmission subframe; or select a transmission subframe in a carrier with a minimum number from the transmission subframes indicated by the plurality of pieces of indication information, and transmit the HARQ feedback information to the base station within the transmission subframe; or select one or more transmission subframes from the transmission subframes indicated by the plurality of pieces of indication information in accordance with a dynamic indicator from the base station, and transmit the HARQ feedback information to the base station within the selected one or more transmission subframes.

In a possible embodiment of the present disclosure, the dynamic indicator is uplink scheduling signaling, and trigger signaling for the HARQ feedback information is carried in the uplink scheduling signaling.

In a possible embodiment of the present disclosure, the transmission module is further configured to perform LBT detection on the transmission subframe, and when the LBT detection is performed successfully, transmit the HARQ feedback information to the base station within the transmission subframe.

In a possible embodiment of the present disclosure, the transmission module is further configured to transmit merely the HARQ feedback information to the base station within the transmission subframe, or transmit the HARQ feedback information and uplink data to the base station within the transmission subframe.

In a possible embodiment of the present disclosure, when the UE transmits both the HARQ feedback information and the uplink data to the base station within the transmission subframe, the HARQ feedback information is mapped to symbols which are located at both sides of a pilot signal within the transmission subframe and configured to transmit the uplink data; or when the UE transmits both the HARQ feedback information and the uplink data to the base station within the transmission subframe, the HARQ feedback information and the uplink data are transmitted in a multiplexing manner; or when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

In a possible embodiment of the present disclosure, when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

In still yet another aspect, the present disclosure provides in some embodiments a base station, including: a transmission module configured to transmit indication information to a UE, the indication information being configured to indicate a transmission subframe for transmitting the HARQ feedback information in a carrier; and a reception module configured to receive the HARQ feedback information transmitted within the transmission subframe from the UE, the HARQ feedback information being generated by the UE.

In a possible embodiment of the present disclosure, the HARQ feedback information includes HARQ ACK feedback information or HARQ NACK feedback information. In a possible embodiment of the present disclosure, the indication information is uplink scheduling signaling for scheduling the transmission of a physical uplink channel.

In a possible embodiment of the present disclosure, the uplink scheduling signaling is configured to indicate through x bits whether the HARQ feedback information is to be transmitted within subframes scheduled by the uplink scheduling signal, where x is a positive integer greater than or equal to 1.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

In a possible embodiment of the present disclosure, the uplink scheduling signaling is configured to indicate that merely the HARQ feedback information is transmitted within the subframes scheduled by the uplink scheduling signal through a specific bit field setting.

In a possible embodiment of the present disclosure, the indication information is signaling for scheduling the transmission of the HARQ feedback information.

In a possible embodiment of the present disclosure, the signaling is configured to indicate through x bits whether the HARQ feedback information is to be transmitted within subframes scheduled by the signaling, where x is a positive integer greater than or equal to 1.

In a possible embodiment of the present disclosure, the UE is configured to determine a size of a codebook for the HARQ feedback information, and generate the HARQ feedback information in accordance with the size of the codebook.

In a possible embodiment of the present disclosure, the size of the codebook for the HARQ feedback information is determined by the UE in accordance with target information, and the target information includes one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

In a possible embodiment of the present disclosure, the size of the codebook for the HARQ feedback information is determined by the UE in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station.

In a possible embodiment of the present disclosure, the HARQ feedback information is generated through: cascading, by the UE, feedback bits for at least one carrier in accordance with a carrier number to acquire the codebook, and generating the HARQ feedback information in accordance with the size of the codebook, the feedback bits for each carrier being ranked in accordance with a process number; or ranking, by the UE, HARQ feedback bits in accordance with the C-DAI in both the frequency domain and the time domain to acquire the codebook, and generating the HARQ feedback information in accordance with the size of the codebook; or cascading, by the UE, the feedback bits for at least one carrier in accordance with the carrier number to acquire the codebook, and generating the HARQ feedback information in accordance with the size of the codebook, the feedback bits for each carrier being ranked in accordance with the C-DAI in the time domain.

In a possible embodiment of the present disclosure, the transmission module is further configured to transmit a plurality of pieces of indication information to the UE on one or more carriers within a same downlink subframe, each piece of indication information being configured to indicate the transmission subframe for transmitting the HARQ feedback information in different carriers. The reception module is further configured to receive from the UE the same HARQ feedback information within the transmission subframes on a plurality of carriers indicated by the plurality of pieces of indication information, or receive from the UE the HARQ feedback information within a specific transmission subframe, the specific transmission subframe including one or more subframes of the transmission subframes indicated by the plurality of pieces of indication information.

In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information.

In a possible embodiment of the present disclosure, the reception module is further configured to: receive from the UE the HARQ feedback information transmitted within at least one transmission subframe, the at least one transmission subframe being a transmission subframe which is selected by the UE from the transmission subframes indicated by the plurality of pieces of indication information and which belongs to a carrier preconfigured by the base station; or receive from the UE the HARQ feedback information transmitted within a transmission subframe, the transmission subframe being a transmission subframe in a carrier with a minimum number which is selected by the UE from the transmission subframes indicated by the plurality of pieces of indication information; receive from the UE the HARQ feedback information transmitted within at least one transmission subframe, the at least one transmission subframe including one or more transmission subframes which are selected from the transmission subframes indicated by the plurality of pieces of indication information in accordance with a dynamic indicator from the base station. In a possible embodiment of the present disclosure, the dynamic indicator is uplink scheduling signaling, and trigger signaling for the HARQ feedback information is carried in the uplink scheduling signaling.

In a possible embodiment of the present disclosure, when the UE transmits the HARQ feedback information to the base station within the transmission subframe, the UE is configured to perform LBT detection on the transmission subframe, and when the LBT detection is performed successfully, transmit the HARQ feedback information to the base station within the transmission subframe.

In a possible embodiment of the present disclosure, the reception module is further configured to receive the HARQ feedback information merely transmitted within the transmission subframe from the UE, or receive the HARQ feedback information and uplink data transmitted within the transmission subframe from the UE.

In a possible embodiment of the present disclosure, when the UE transmits both the HARQ feedback information and the uplink data to the base station within the transmission subframe, the HARQ feedback information is mapped to symbols which are located at both sides of a pilot signal within the transmission subframe and configured to transmit the uplink data; or when the UE transmits both the HARQ feedback information and the uplink data to the base station within the transmission subframe, the HARQ feedback information and the uplink data are transmitted in a multiplexing manner; or when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

In a possible embodiment of the present disclosure, when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

In still yet another aspect, the present disclosure provides in some embodiments a system for transmitting HARQ feedback information, including: a base station configured to transmit indication information to a UE, the indication information being configured to indicate a transmission subframe for transmitting the HARQ feedback information in a carrier; and the UE configured to receive the indication information from the base station, generate the HARQ feedback information, and transmit the HARQ feedback information to the base station within the transmission subframe. The base station is further configured to receive the HARQ feedback information transmitted within the transmission subframe from the UE.

According to the embodiments of the present disclosure, the UE receives the indication information from the base station, and the indication information is configured to indicate the transmission subframe for transmitting the HARQ feedback information in the carrier. Then, the UE generates the HARQ feedback information and transmit the HARQ feedback information to the base station within the transmission subframe. As a result, it is able to transmit the HARQ feedback information.

### BRIEF DESCRIPTION OF THE DRAWINGS

FIG. 1 is a schematic view showing a network according to one embodiment of the present disclosure;
FIG. 2 is a flow chart of a method for transmitting HARQ feedback information according to one embodiment of the present disclosure;
FIG. 3 is a flow chart of another method for transmitting HARQ feedback information according to one embodiment of the present disclosure;
FIG. 4 is a schematic view sowing a UE according to one embodiment of the present disclosure;
FIG. 5 is a schematic view showing a base station according to one embodiment of the present disclosure;
FIG. 6 is another schematic view showing the UE according to one embodiment of the present disclosure;
FIG. 7 is another schematic view showing the base station according to one embodiment of the present disclosure; and
FIG. 8 is a schematic view showing a system for transmitting HARQ feedback information according to one embodiment of the present disclosure.

### DETAILED DESCRIPTION OF THE EMBODIMENTS

In order to make the objects, the technical solutions and the advantages of the present disclosure more apparent, the present disclosure will be described hereinafter in a clear and complete manner in conjunction with the drawings and embodiments.

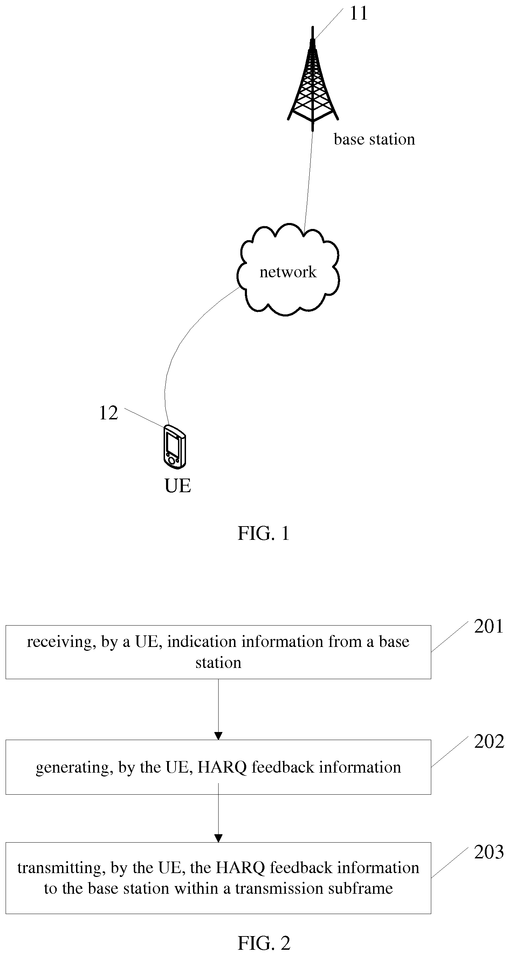

As shown in FIG. 1, which is a schematic view showing a network according to one embodiment of the present disclosure, the network includes a base station 11 and a UE 12. The base station 11 may be an evolved Node B (eNB) or any other base station, and a type of the base station 11 will not be particularly defined herein. Communication connection, e.g., wireless communication connection as shown in FIG. 1, may be established between the base station 11 and the UE 12. The UE 12 may be a terminal device such as a mobile phone, a tablet personal computer, a laptop computer, a Personal Digital Assistant (PDA), a Mobile Internet Device (MID) or a wearable device, and a type of the UE 12 will not be particularly defined herein. Based on the network in FIG. 1, the present disclosure provides in some embodiments a method for transmitting HARQ feedback information which, as shown in FIG. 2, includes: Step 201 of receiving, by a UE, indication information from a base station, the indication information being configured to indicate a transmission subframe for transmitting the HARQ feedback information in a carrier; Step 202 of generating, by the UE, the HARQ feedback information; and Step 203 of transmitting, by the UE, the HARQ feedback information to the base station within the transmission subframe. During the implementation, the indication information may be transmitted within a downlink subframe of a carrier. In addition, the transmission subframe may also be a subframe of the carrier. For example, the base station may transmit the indication information within a subframe 5 of a carrier 7, so as to indicate a subframe 9 of the carrier 7 as the transmission subframe for transmitting the HARQ feedback information. Of course, in some scenarios, merely one piece of indication information may be transmitted, i.e., in Step 201, merely one piece of indication information may be received. In some other scenarios, a plurality of pieces of indication information may be transmitted, i.e., in Step 201, the plurality of pieces of indication information may be received. For example, during intra-carrier scheduling, the base station may further transmit the indication information within subframes 6 of carriers 8, 9 and 10, so as to indicate subframes 10 of the carriers 8, 9 and 10 as the transmission subframes for transmitting the HARQ feedback information. During inter-carrier scheduling, the base station may transmit three pieces of indication information within a subframe 6 of the carrier 8, so as to indicate the subframes of the carriers 8, 9 and 10 as the transmission subframes 10 for transmitting the HARQ feedback information.

It should be appreciated that, the transmission subframe may be configured to transmit, but not limited to, the HARQ feedback information. For example, the transmission subframe may be configured to transmit the HARQ feedback information and uplink data, or merely transmit the HARQ feedback information. Of course, in some scenarios, the transmission subframe may be configured to merely transmit the HARQ feedback information. When the indication information includes a bit field indicating whether the HARQ feedback information is capable of being transmitted but the bit field indicates that the HARQ feedback information is not contained within the corresponding transmission subframe, the transmission subframe may be further configured to merely transmit the uplink data.

During the implementation, when the UE transmits the HARQ feedback information to the base station within the transmission subframe, the HARQ feedback information may be mapped to the transmission subframe and then transmitted to the base station. In addition, during the implementation, the carrier may be a non-licensed carrier, so as to transmit the HARQ feedback information through the non-licensed carrier, thereby to reduce a control channel overhead on a licensed primary carrier. Of course, in some scenarios the carrier may also be a licensed carrier, i.e., a type of the carrier will not be particularly defined herein.

In a possible embodiment of the present disclosure, the HARQ feedback information may include HARQ ACK feedback information or HARQ NACK feedback information.

During the implementation, it is able to transmit the HARQ ACK feedback information or the HARQ NACK feedback information.

In a possible embodiment of the present disclosure, the indication information may be uplink scheduling signaling for scheduling the transmission of a physical uplink channel.

During the implementation, the transmission subframe is a subframe scheduled by the uplink scheduling signaling, so as to schedule the transmission of the HARQ feedback information through the uplink scheduling signaling for scheduling the transmission of the physical uplink channel. In addition, the uplink scheduling signaling for scheduling the transmission of the physical uplink channel may be in a Downlink Control Information (DCI) format. Whether the uplink scheduling signaling is used for scheduling the transmission of a Physical Uplink Shared Channel (PUSCH), the transmission of the HARQ feedback information or both may be determined in accordance with whether some fields in the DCI format have specific values.

In a possible embodiment of the present disclosure, the uplink scheduling signaling may be configured to indicate through x bits whether the HARQ feedback information is to be transmitted within subframes scheduled by the uplink scheduling signal, where x is a positive integer greater than or equal to 1.

In a possible embodiment of the present disclosure, when x=l, one bit may be used to indicate whether the HARQ feedback information is to be transmitted within the subframes scheduled by the uplink scheduling signaling. When the bit has a value of 0, it means that the HARQ ACK feedback information is not to be transmitted, and when the bit has a value of 1, it means that the HARQ feedback information is to be transmitted. Of course, x may also have a value of 2 or 3, and the value of x will not be particularly defined herein. In some embodiments of the present disclosure, the uplink scheduling signaling may not indicate through x bits whether the HARQ feedback information is to be transmitted within the subframes scheduled by the uplink scheduling signal. For example, upon the receipt of the uplink scheduling signaling, the HARQ feedback information is to be transmitted through the uplink scheduling signaling by default.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

For example, when the subframe scheduled by the uplink scheduling signaling is a subframe n, the HARQ feedback information includes HARQ feedback information generated within all downlink subframes which are located before a subframe n-3 and within which no HARQ feedback is performed. In other words, the UE may transmit to the base station, within the subframe scheduled by the uplink scheduling signaling, the HARQ feedback information generated within all downlink subframes which are located before the subframe n-3 and within which no HARQ feedback is performed. Because HARQ feedback information within all the downlink subframes are transmitted once, it is able to prevent a size of the HARQ feedback information from being understood differently between the base station and the UE.

In a possible embodiment of the present disclosure, the uplink scheduling signaling may be configured to indicate that merely the HARQ feedback information is transmitted within the subframes scheduled by the uplink scheduling signal through a specific bit field setting.

During the implementation, it is able to merely transmit the HARQ feedback information, rather than the uplink data, within the subframe scheduled by the uplink scheduling signaling, thereby to ensure the UE to perform the HARQ feedback even when no uplink data is transmitted.

In a possible embodiment of the present disclosure, the indication information may be signaling for scheduling the transmission of the HARQ feedback information. During the implementation, the base station may generate and issue specific scheduling signaling for the HARQ feedback information. The scheduling signaling may also be in the DCI format, and whether the signaling is used for scheduling the transmission of the HARQ feedback information may be determined in accordance with whether some fields in the DCI format have specific values. The transmission subframe may be just the subframe scheduled by the scheduling signaling.

In a possible embodiment of the present disclosure, the signaling may be configured to indicate through x bits whether the HARQ feedback information is to be transmitted within subframes scheduled by the signaling, where x is a positive integer greater than or equal to 1.

In a possible embodiment of the present disclosure, when x=1, one bit may be used to indicate whether the HARQ feedback information is to be transmitted within the subframe scheduled by the signaling. When the bit has a value of 0, it means that no HARQ ACK feedback information may be transmitted, and when the bit has a value of 1, it means that the HARQ feedback information may be transmitted. Of course, x may also have a value of 2 or 3, and the value of x will not be particularly defined herein. In some embodiments of the present disclosure, the signaling may not be configured to indicate through x bits whether the HARQ feedback information is to be transmitted within the subframes scheduled by the signaling. For example, upon the receipt of the signaling by the UE, the HARQ feedback information may be transmitted through the signaling by default.

In a possible embodiment of the present disclosure, the generating, by the UE, the HARQ feedback information may include determining, by the UE, a size of a codebook for the HARQ feedback information, and generating the HARQ feedback information in accordance with the size of the codebook.

During the implementation, the size of the codebook may be determined temporarily in accordance with some information, or preset by the UE. In addition, when the HARQ feedback information is generated in accordance with the size of the codebook, it means that the HARQ feedback information has the codebook at the mentioned size. The HARQ feedback information may consist of a series of bits having values of 0s and Is. In addition, in some scenarios, the HARQ feedback information may also be generated by the UE in other ways. For example, the UE may generate the HARQ feedback information in a fixed format or at a fixed size, which will not be particularly defined herein.

In a possible embodiment of the present disclosure, the determining, by the UE, the size of the codebook for the HARQ feedback information may include determining, by the UE, the size of the codebook for the HARQ feedback information in accordance with target information. The target information may include one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

During the implementation, the size of the codebook for the HARQ feedback information may be determined in accordance with one or more of the above information. For example, when any of the above information is adopted, the size of the codebook for the HARQ feedback information may be determined in accordance with a predetermined mapping relationship between the parameter and the size of the codebook. When more than one piece of the above information are adopted, an operation may be performed on these pieces of information in advance, so as to determine the size of the codebook for the HARQ feedback information. The modes for determining the size of the codebook for the HARQ feedback information will not be particularly defined herein.

The C-DAI in both the frequency domain and the time domain may be an index of the subframe for the downlink data scheduled by the base station, and the base station may count the scheduled subframes in a frequency-domain-before-time-domain manner. The T-DAI may be the total quantity of all the downlink subframes which need to be notified by the UE within an uplink subframe, and it may be updated within each subframe in the time domain. The C-DAI in the time domain may be an index of the downlink data merely scheduled by the base station in the time domain, and the base station may count the scheduled subframes in the time domain in a chronological order. In addition, the quantity of the downlink processes may be a maximum quantity of the downlink processes, or the quantity of the currently-running downlink processes. The predefined parameter may be a preset numerical value, e.g., 3, 5 or 8.

In a possible embodiment of the present disclosure, the determining, by the UE, the size of the codebook for the HARQ feedback information in accordance with the target information may include determining, by the UE, the size of the codebook for the HARQ feedback information in accordance with the C-DAI in both the frequency domain and the time domain, the T-DAI and the quantity of the TBs.

During the implementation, the size of the codebook for the HARQ feedback information may be determined in accordance with a correspondence between the C-DAI in both the frequency domain and the time domain, the T-DAI as well as the quantity of the TBs and the size of the codebook. In addition, a predetermined operation may be performed on the C-DAI in both the frequency domain and the time domain, the T-DAI and the quantity of the TBs, and then an operation result may serve as the codebook for the HARQ feedback information.

In a possible embodiment of the present disclosure, the determining, by the UE, the size of the codebook for the HARQ feedback information in accordance with the target information may include determining, by the UE, the size of the codebook for the HARQ feedback information in accordance with the C-DAI in the time domain, the T-DAI, the quantity of the configured carriers and the quantity of the TBs. During the implementation, the size of the codebook for the HARQ feedback information may be determined in accordance with a correspondence between the C-DAI in the time domain, the T-DAI, the quantity of the configured carriers as well as the quantity of the TBs and the size of the codebook. In addition, a predetermined operation may also be performed on the C-DAI in the time domain, the T-DAI, the quantity of the configured carriers and the quantity of the TBs, and an operation result may serve as the codebook for the HARQ feedback information. For example, when the C-DAI in the time domain is 5, the T-DAI is 5, the quantity of the configured carriers is 5 and the quantity of the TBs is 2, the size of the codebook may be 5*5*2=50 bits.

In a possible embodiment of the present disclosure, the determining, by the UE, the size of the codebook for the HARQ feedback information in accordance with the target information may include determining, by the UE, the size of the codebook for the HARQ feedback information in accordance with the quantity of downlink processes, the quantity of the configured carriers and the quantity of the TBs.

During the implementation, the size of the codebook for the HARQ feedback information may be determined in accordance with a correspondence between the quantity of downlink processes, the quantity of the configured carriers as well as the quantity of the TBs and the size of the codebook. In addition, a predetermined operation may also be performed on the quantity of downlink processes, the quantity of the configured carriers and the quantity of the TBs, and an operation result may serve as the codebook for the HARQ feedback information. For example, when the quantity of the downlink processes is 16, the quantity of the configured carriers is 5, and the quantity of the TBs is 1, the size of the codebook for the HARQ ACK feedback information may be 16*5*1=80 bits.

In a possible embodiment of the present disclosure, the determining, by the UE, the size of the codebook for the HARQ feedback information in accordance with the target information may include determining, by the UE, the size of the codebook for the HARQ feedback information in accordance with the predefined parameter, the quantity of the configured carriers and the quantity of the TBs.

During the implementation, the size of the codebook for the HARQ feedback information may be determined in accordance with a correspondence between the predefined parameter, the quantity of the configured carriers as well as the quantity of the TBs and the size of the codebook. In addition, a predetermined operation may also be performed on the predefined parameter, the quantity of the configured carriers and the quantity of the TBs, and an operation result may serve as the codebook for the HARQ feedback information. For example, when the predefined parameter is 16, the quantity of the configured carriers is 5 and the quantity of the TBs is 1, the size of the codebook for the HARQ ACK feedback information may be 16*5*1=80 bits.

In a possible embodiment of the present disclosure, the determining, by the UE, the size of the codebook for the HARQ feedback information in accordance with the target information may include determining, by the UE, the size of the codebook for the HARQ feedback information in accordance with the size of the feedback window notified by the base station, the quantity of the configured carriers and the quantity of the TBs.

During the implementation, the size of the codebook for the HARQ feedback information may be determined in accordance with a correspondence between the size of the feedback window notified by the base station, the quantity of the configured carriers as well as the quantity of the TBs and the size of the codebook. In addition, a predetermined operation may be performed on the size of the feedback window notified by the base station, the quantity of the configured carriers and the quantity of the TBs, and then an operation result may serve as the codebook for the HARQ feedback information. For example, when the size of the feedback window notified by the base station is 8, the quantity of the configured carriers is 5 and the quantity of the TBs is 1, the size of the codebook for the HARQ ACK feedback information may be 8*5*1=40 bits.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station. During the implementation, when the quantity of the TBs is determined in accordance with the transmission mode adopted by the carrier and the transmission mode adopted by the carrier corresponds to a single codeword, the quantity of the TBs may be 1, and when the transmission mode corresponds to multiple codewords, the quantity of the TBs may be 2. When the quantity of the TBs is determined in accordance with the configuration of the base station, the base station may indicate, through high layer signaling, whether 1-bit information or 2-bit information is to be transmitted within each subframe of each carrier in the HARQ ACK feedback information. When the quantity of the TBs is determined in accordance with the transmission mode adopted by the carrier and the configuration of the base station, the base station may indicate, through the high layer signaling, whether feedback bits for different code blocks are to be combined. When it is necessary to combine the feedback bits, merely one bit may be transmitted within each subframe of each carrier. When it is unnecessary to combine the feedback bits, one bit may be transmitted within each subframe of the carrier whose transmission mode corresponds to the single codeword, and 2 bits may be transmitted within each subframe of the carrier whose transmission mode corresponds to the multiple codewords.

In a possible embodiment of the present disclosure, the generating, by the UE, the HARQ feedback information in accordance with the size of the codebook may include cascading, by the UE, feedback bits for at least one carrier in accordance with a carrier number to acquire the codebook, and generating the HARQ feedback information in accordance with the size of the codebook. The feedback bits for each carrier may be ranked in accordance with a process number.

During the implementation, it is able to cascade the feedback bits for one or more carriers in accordance with the carrier number to acquire the codebook, and generate the HARQ feedback information in accordance with the size of the codebook. In addition, the feedback bits for each carrier maybe ranked in accordance with the process number, so as to transmit the feedback bits for a plurality of processes in each carrier to the base station. For example, when the size of the codebook is 80, the processes scheduled by the base station on carriers 6 to 9 are 1 to 4, the processes scheduled by the base station on carrier 10 are 3, 5, 8 and 12, and the UE has correctly received all the downlink data and indication information, the UE may generate the feedback bit 1111000000000000 for the carriers 6 to 9, and generate the feedback bit 0010100100010000 for the carrier 10, and then cascade the feedback bits for each carrier in accordance with the carrier number so as to acquire the code book including 80 bits for the HARQ ACK feedback information.

In a possible embodiment of the present disclosure, the generating, by the UE, the HARQ feedback information in accordance with the size of the codebook may include ranking, by the UE, HARQ feedback bits in accordance with the C-DAI in both the frequency domain and the time domain to acquire the codebook, and generating the HARQ feedback information in accordance with the size of the codebook.

During the implementation, it is able to rank the HARQ feedback bits in accordance with the C-DAI in both the frequency domain and the time domain, and generate the HARQ feedback information. To be specific, the HARQ feedback bits may be ranked in a time-domain-before-frequency-domain manner, or in a frequency-domain-before-time-domain manner, which will not be particularly defined herein.

In a possible embodiment of the present disclosure, the generating, by the UE, the HARQ feedback information in accordance with the size of the codebook may include cascading, by the UE, the feedback bits for at least one carrier in accordance with the carrier number to acquire the codebook, and generating the HARQ feedback information in accordance with the size of the codebook. The feedback bits for each carrier may be ranked in accordance with the C-DAI in the time domain.

During the implementation, it is able to cascade the feedback bits for one or more carriers in accordance with the carrier number to acquire the codebook, and generate the HARQ feedback information in accordance with the size of the codebook. In addition, the feedback bits for each carrier may be ranked in accordance with the process number, so as to transmit the feedback bits for a plurality of subframes of each carrier to the base station.

In a possible embodiment of the present disclosure, the receiving, by the UE, the indication information from the base station may include receiving, by the UE, a plurality of pieces of indication information from the base station on one or more carriers within a same downlink subframe, and each indication information may be configured to indicate the transmission subframe for transmitting the HARQ feedback information in different carriers. In other words, the plurality of pieces of indication information may be received in Step 201. For example, the base station may further transmit the indication information within the subframes 6 of the carriers 8, 9 and 10, so as to indicate the subframes 10 of the carriers 8, 9 and 10 as the transmission subframes for transmitting the HARQ feedback information.

In a possible embodiment of the present disclosure, the transmitting, by the UE, the HARQ feedback information to the base station within the transmission subframes may include transmitting, by the UE, the same HARQ feedback information to the base station within the transmission subframes on a plurality of carriers indicated by the plurality of pieces of indication information.

During the implementation, it is able to transmit the same HARQ feedback information to the base station within the plurality of transmission subframes, thereby to improve the transmission accuracy of the feedback information. Of course, in some scenarios, the HARQ feedback information may also be transmitted within the plurality of transmission subframes. For example, the size of the codebook may be 80 bits, the processes 1 to 5 may be scheduled on the carriers 6 to 9, the processes 3, 5, 8, 12 and 13 may be scheduled on the carrier 10, the subframe 9 of the carrier 7 may be the transmission subframe for transmitting the HARQ feedback information, and the subframe 10 of the carrier 8 may be the transmission subframe for transmitting the HARQ feedback information. When the UE has correctly received all the downlink data and indication information, the UE may generate the feedback information to be transmitted within the subframe 9 at first, and the feedback information may include the feedback bits 1111000000000000 for the carriers 6 to 9 and the feedback bits 0010100100010000 for the carrier 10, When the feedback information has been successfully transmitted within the subframe 9, the UE may generate the feedback bits 0000100000000000 for the carriers 6 to 9 within the subframe 10, and generate the feedback bits 0000000000001000 for the carrier 10 within the subframe 10, so as to transmit the HARQ feedback information within the subframes 9 and 10. Of course, when the LBT detection has been performed unsuccessfully within the subframe 9 and no HARQ ACK feedback information is to be transmitted, the UE may generate the feedback bits 1111100000000000 for the carriers 6 to 9 within the subframe 10, and generate the feedback bits 0010100100011000 for the carrier 10 within the subframe 10, so as to transmit the HARQ feedback information.

In a possible embodiment of the present disclosure, the transmitting, by the UE, the HARQ feedback information to the base station within the transmission subframes may include transmitting, by the UE, the HARQ feedback information to the base station within a specific transmission subframe, and the specific transmission subframe may include one or more subframes of the transmission subframes indicated by the plurality of pieces of indication information.

During the implementation, it is able to transmit the HARQ feedback information within one of the plurality of transmission subframes, thereby to save network resources.

In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information. During the implementation, it is able for the UE to transmit the HARQ feedback information corresponding to the downlink subframe of the carrier in the same group of carriers for the uplink control information. To be specific, the UE may transmit the HARQ feedback information corresponding to the downlink subframes of all the carriers in the group of carriers for the uplink control information.

In a possible embodiment of the present disclosure, the transmitting, by the UE, the HARQ feedback information to the base station within the special transmission subframe may include selecting, by the UE, a transmission subframe, which belongs to a carrier preconfigured by the base station, from the transmission subframes indicated by the plurality of pieces of indication information, and transmitting the HARQ feedback information to the base station within the transmission subframe.

To be specific, the UE may receive configuration signaling from the base station in advance, and the configuration signaling may be configured to indicate the carriers for the transmission of the HARQ feedback information. As a result, it is able for the UE to select the transmission subframe which belongs to the carrier preconfigured by the base station from the transmission subframes indicated by the plurality of pieces of indication information.

In a possible embodiment of the present disclosure, the transmitting, by the UE, the HARQ feedback information to the base station within the special transmission subframe may include selecting, by the UE, a transmission subframe in a carrier with a minimum number from the transmission subframes indicated by the plurality of pieces of indication information, and transmitting the HARQ feedback information to the base station within the transmission subframe.

During the implementation, the HARQ feedback information may be transmitted to the base station within the transmission subframe in the carrier with the minimum number.

In a possible embodiment of the present disclosure, the transmitting, by the UE, the HARQ feedback information to the base station within the special transmission subframe may include selecting, by the UE, one or more transmission subframes from the transmission subframes indicated by the plurality of pieces of indication information in accordance with a dynamic indicator from the base station, and transmitting the HARQ feedback information to the base station within the selected one or more transmission subframes.

During the implementation, the dynamic indicator may be signaling transmitted by the base station to the UE, and the signaling may be configured to indicate the transmission subframe within which the HARQ feedback information is to be transmitted.

In a possible embodiment of the present disclosure, the dynamic indicator may be uplink scheduling signaling, and trigger signaling for the HARQ feedback information may be carried in the uplink scheduling signaling.

During the implementation, the UE may select one transmission subframe in accordance with the trigger signaling carried in the uplink scheduling signaling, so as to transmit the HARQ feedback information. To be specific, the UE may transmit the HARQ feedback information within the transmission subframe of the carrier for transmitting the uplink scheduling signaling.

In a possible embodiment of the present disclosure, the transmitting, by the UE, the HARQ feedback information to the base station within the transmission subframe includes performing, by the UE, LBT detection on the transmission subframe, and when the LBT detection is performed successfully, transmitting the HARQ feedback information to the base station within the transmission subframe.

During the implementation, when the UE has performed the LBT detection successfully, the UE may transmit the HARQ feedback information within the transmission subframe, or when the UE has performed the LBT detection unsuccessfully, the UE may not transmit the HARQ feedback information within the transmission subframe. Of course, when the plurality of pieces of indication information has been received by the UE and the LBT detection has been performed unsuccessfully within the transmission subframe indicated by one piece of indication information, the HARQ feedback information may be transmitted within the transmission subframes indicated by the other pieces of indication information.

In a possible embodiment of the present disclosure, the transmitting, by the UE, the HARQ feedback information to the base station within the transmission subframe may include transmitting, by the UE, merely the HARQ feedback information to the base station within the transmission subframe.

During the implementation, the HARQ feedback information, rather than the other information such as the uplink data, may be transmitted within the transmission subframe. For example, when the transmission subframe is a subframe scheduled by the uplink scheduling signaling, merely the HARQ feedback information may be transmitted within the transmission subframe, or when the transmission subframe is a subframe scheduled by signaling for scheduling the HARQ feedback information, merely the HARQ feedback information may be transmitted within the transmission subframe.

In a possible embodiment of the present disclosure, the transmitting, by the UE, the HARQ feedback information to the base station within the transmission subframe may include transmitting, by the UE, both the HARQ feedback information and the uplink data to the base station within the transmission subframe.

During the implementation, both the HARQ feedback information and the uplink data may be transmitted within the transmission subframe, so as to improve the utilization of the network resources. For example, when the transmission subframe is a subframe scheduled by the uplink scheduling signaling, both the HARQ feedback information and the uplink data may be transmitted within the transmission subframe, or when the transmission subframe is a subframe scheduled by signaling for scheduling the HARQ feedback information, the HARQ feedback information and the uplink data may be transmitted within the transmission subframe.

In a possible embodiment of the present disclosure, when the UE transmits both the HARQ feedback information and the uplink data to the base station within the transmission subframe, the HARQ feedback information may be mapped to symbols which are located at both sides of a pilot signal within the transmission subframe and configured to transmit the uplink data.

During the implementation, the HARQ feedback information may be mapped to the symbols which are located at both sides of the pilot signal within the transmission subframe and configured to transmit the uplink data, so it is able to transmit the HARQ feedback information at both sides of the pilot signal in a punching manner during the transmission of the uplink data.

In a possible embodiment of the present disclosure, when the UE transmits both the HARQ feedback information and the uplink data to the base station within the transmission subframe, the HARQ feedback information and the uplink data may be transmitted in a multiplexing manner.

During the implementation, the HARQ feedback information and the uplink data may be transmitted within the transmission subframe in a multiplexing manner to the base station, so as to improve the utilization of the network resources.

In a possible embodiment of the present disclosure, when the HARQ feedback information and the uplink data are transmitted in a multiplexing manner, the UE may be configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner.

The modulation order may be indicated by the base station in advance or temporarily. During the implementation, the modulation result is mapped to the resources within the transmission subframe in a time-domain-before-frequency-domain manner, so it is able to transmit the HARQ feedback information and the uplink data in a multiplexing manner within the transmission subframe.

In a possible embodiment of the present disclosure, when the HARQ feedback information and the uplink data are transmitted in a multiplexing manner, the UE may be configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

During the implementation, the encoding bits of the HARQ feedback information are cascaded with the encoding bits of the uplink data, and then the cascaded encoding bits are interleaved, so it is able to improve the performance of the transmission of the HARQ feedback information and the uplink data. In addition, the modulation result is mapped to the resources within the transmission subframe in a time-domain-before-frequency-domain manner, so it is able to transmit the HARQ feedback information and the uplink data within the transmission subframe in a multiplexing manner.

In a possible embodiment of the present disclosure, when the UE transmits both the HARQ feedback information and the uplink data to the base station within the transmission subframe, a modulation symbol for the HARQ feedback information may be mapped to y symbols located at both sides of the pilot signal within the transmission subframe, and a modulation signal for the uplink data may be mapped to a resource other than resources occupied by the pilot signal and the modulation symbol for the HARQ feedback information within the transmission subframe, where y is a positive integer greater than or equal to 1.

During the implementation, the resources occupied by the pilot signal and the modulation symbol may be Resource Elements (REs), i.e., the modulation symbol for the uplink data may be mapped to the REs other than the REs occupied by the pilot signal and the modulation symbol within the transmission subframe. In addition, when merely the HARQ feedback information is transmitted within the transmission subframe, the HARQ feedback information may be mapped independently to all available REs within the transmission subframe for transmission.

According to the embodiments of the present disclosure, the UE receives the indication information from the base station, and the indication information is configured to indicate the transmission subframe in the carrier for transmitting the HARQ feedback information. Then, the UE generates the HARQ feedback information, and transmits the HARQ feedback information to the base station within the transmission subframe. As a result, it is able to transmit the HARQ feedback transmission.

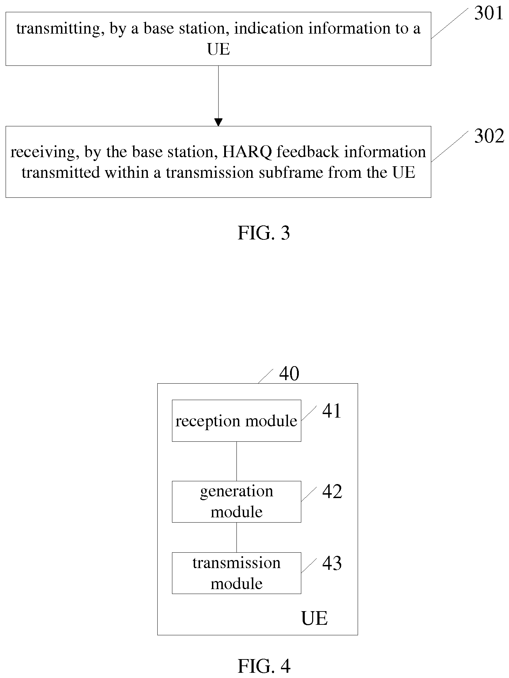

Based on the network in FIG. 1, the present disclosure further provides in some embodiments a method for transmitting HARQ feedback information which, as shown in FIG. 3, includes: Step 301 of transmitting, by a base station, indication information to a UE, the indication information being configured to indicate a transmission subframe for transmitting the HARQ feedback information in a carrier; and Step 302 of receiving, by the base station, the HARQ feedback information transmitted within the transmission subframe from the UE, the HARQ feedback information being generated by the UE.

In a possible embodiment of the present disclosure, the HARQ feedback information includes HARQ ACK feedback information or HARQ NACK feedback information. In a possible embodiment of the present disclosure, the indication information is uplink scheduling signaling for scheduling the transmission of a physical uplink channel.

In a possible embodiment of the present disclosure, the uplink scheduling signaling is configured to indicate through x bits whether the HARQ feedback information is to be transmitted within subframes scheduled by the uplink scheduling signal, where x is a positive integer greater than or equal to 1.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

In a possible embodiment of the present disclosure, the uplink scheduling signaling is configured to indicate that merely the HARQ feedback information is transmitted within the subframes scheduled by the uplink scheduling signal through a specific bit field setting.

In a possible embodiment of the present disclosure, the indication information is signaling for scheduling the transmission of the HARQ feedback information.

In a possible embodiment of the present disclosure, the signaling is configured to indicate through x bits whether the HARQ feedback information is to be transmitted within subframes scheduled by the signaling, where x is a positive integer greater than or equal to 1.

In a possible embodiment of the present disclosure, the UE is configured to determine a size of a codebook for the HARQ feedback information, and generate the HARQ feedback information in accordance with the size of the codebook.

In a possible embodiment of the present disclosure, the size of the codebook for the HARQ feedback information is determined by the UE in accordance with target information, and the target information includes one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

In a possible embodiment of the present disclosure, the size of the codebook for the HARQ feedback information is determined by the UE in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station.

In a possible embodiment of the present disclosure, the HARQ feedback information is generated through: cascading, by the UE, feedback bits for at least one carrier in accordance with a carrier number to acquire the codebook, and generating the HARQ feedback information in accordance with the size of the codebook, the feedback bits for each carrier being ranked in accordance with a process number; or ranking, by the UE, HARQ feedback bits in accordance with the C-DAI in both the frequency domain and the time domain to acquire the codebook, and generating the HARQ feedback information in accordance with the size of the codebook; or cascading, by the UE, the feedback bits for at least one carrier in accordance with the carrier number to acquire the codebook, and generating the HARQ feedback information in accordance with the size of the codebook, the feedback bits for each carrier being ranked in accordance with the C-DAI in the time domain.

In a possible embodiment of the present disclosure, the transmitting, by the base station, the indication information to the UE includes transmitting, by the base station, a plurality of pieces of indication information to the UE on one or more carriers within a same downlink subframe, each piece of indication information being configured to indicate the transmission subframe for transmitting the HARQ feedback information in different carriers. The receiving, by the base station, the HARQ feedback information transmitted within the transmission subframe from the UE includes receiving, by the base station, from the UE the same HARQ feedback information within the transmission subframes on a plurality of carriers indicated by the plurality of pieces of indication information, or receiving from the UE the HARQ feedback information within a specific transmission subframe, the specific transmission subframe including one or more subframes of the transmission subframes indicated by the plurality of pieces of indication information.

In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information.

In a possible embodiment of the present disclosure, the receiving, by the base station, from the UE the HARQ feedback information transmitted within the specific transmission subframe includes: receiving, by the base station, from the UE the HARQ feedback information transmitted within at least one transmission subframe, the at least one transmission subframe being a transmission subframe which is selected by the UE from the transmission subframes indicated by the plurality of pieces of indication information and which belongs to a carrier preconfigured by the base station; or receiving, by the base station, from the UE the HARQ feedback information transmitted within a transmission subframe, the transmission subframe being a transmission subframe in a carrier with a minimum number which is selected by the UE from the transmission subframes indicated by the plurality of pieces of indication information; receiving, by the base station, from the UE the HARQ feedback information transmitted within at least one transmission subframe, the at least one transmission subframe including one or more transmission subframes which are selected from the transmission subframes indicated by the plurality of pieces of indication information in accordance with a dynamic indicator from the base station. In a possible embodiment of the present disclosure, the dynamic indicator is uplink scheduling signaling, and trigger signaling for the HARQ feedback information is carried in the uplink scheduling signaling.

In a possible embodiment of the present disclosure, when the UE transmits the HARQ feedback information to the base station within the transmission subframe, the UE is configured to perform LBT detection on the transmission subframe, and when the LBT detection is performed successfully, transmit the HARQ feedback information to the base station within the transmission subframe.

In a possible embodiment of the present disclosure, the receiving, by the base station, the HARQ transmission information transmitted within the transmission subframe from the UE includes receiving, by the base station, the HARQ feedback information merely transmitted within the transmission subframe from the UE, or receiving, by the base station, both the HARQ feedback information and uplink data transmitted within the transmission subframe from the UE.

In a possible embodiment of the present disclosure, when the UE transmits both the HARQ feedback information and the uplink data to the base station within the transmission subframe, the HARQ feedback information is mapped to symbols which are located at both sides of a pilot signal within the transmission subframe and configured to transmit the uplink data; or when the UE transmits both the HARQ feedback information and the uplink data to the base station within the transmission subframe, the HARQ feedback information and the uplink data are transmitted in a multiplexing manner; or when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

In a possible embodiment of the present disclosure, when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

It should be appreciated that, the implementation of the method at a base station side may refer to that mentioned in the embodiments as shown in FIG. 2, which will not be particularly defined herein. Identically, through the method, it is able to transmit the HARQ feedback information.

The method will be described hereinafter in more details in conjunction with some examples.

### Example 1

In this example, 10 number of carriers are aggregated at the UE, where a carrier 1 is a licensed primary carrier, and carriers 2 to 10 are non-licensed carriers. In addition, the carriers 1 to 5 belong to a carrier group A, and the carriers 6 to 10 belong to a carrier group B. In the carrier group A, the HARQ feedback information is transmitted by the UE to the base station using a conventional Carrier Aggregation (CA) mode, so in this example, the transmission of the HARQ feedback information in the carrier group B will be described hereinafter.

The base station may support at most 16 downlink processes. The base station may schedule single-codeword downlink transmission within subframes 1 to 3 and subframes 5, 6 of the carriers 6 to 10, transmit the indication information within the subframe 5 of the carrier 7 so as to indicate a subframe 9 of the carrier 7 as the transmission subframe for the HARQ feedback information, and transmit the indication information within the subframe 6 of the carrier 8 so as to indicate a subframe 10 of the carrier 8 as the transmission subframe for the HARQ feedback information.

Upon the receipt of the indication information, the UE may determine the size of the codebook for the HARQ ACK feedback information as 16*5*1=80 bits in accordance with the maximum process number (i.e., 16), the quantity of the configured carriers (i.e., 5) and the quantity of the TBs (i.e., 1). Then, the UE may map the feedback bits corresponding to the TB to the codebook for the HRQ feedback information in a process-number-before-carrier-number manner. For example, the processes 1 to 5 are scheduled by the base station on the carriers 6 to 9, while the processes 3, 5, 8, 12 and 13 are scheduled by the base station on the carrier 10. When the UE has correctly received all the downlink data and indication information, the UE may generate the feedback information to be transmitted within the subframe 9 at first, including feedback bits 1111000000000000 for the carriers 6 to 9, and feedback bits 0010100100010000 for the carrier 10. Then, the UE may cascade the feedback bits for each carrier in accordance with the carrier number, so as to acquire the codebook including 80 bits for the HARQ feedback information. When the UE merely transmits the HARQ ACK feedback information and no LBT detection needs to be performed, the UE may directly transmit the feedback bits. Otherwise, the UE may perform the LBT detection within a subframe before the subframe 9 of the carrier 7, and the feedback bits may be transmitted only when the LBT detection has been performed successfully. When the LBT detection has been performed unsuccessfully, the feedback bits may not be transmitted within a current subframe. The HARQ feedback information may be mapped to all available REs within the subframe 9 of the transmission subframes for transmitting the HARQ ACK feedback information, and then transmitted within the subframe 9. When the quantity of available Physical Resource Blocks (PRBs) within the transmission subframe for transmitting the HARQ feedback information is 10, the quantity of the available REs may be 12*(14-2)*10=1440. The resultant 80-bit HARQ feedback information may be subjected to a Tail Biting Convolutional Coding (TBCC) operation, and then modulated to acquire modulation symbols. Then, the modulation symbols may be mapped to the 1440 REs in a one-to-one correspondence manner, and then transmitted through the 1440 REs.

When the UE generates the feedback information to be transmitted within the subframe 10, there may exist the following two circumstances.

Circumstance 1: when the UE has transmitted the HARQ feedback information successfully within the subframe 9, the UE may generate feedback bits 0000100000000000 for the carriers 6 to 9 within the subframe 10, and generate feedback bits 0000000000001000 for the carrier 10 within the subframe 10. Then, the UE may cascade the feedback bits for each carrier in accordance with the carrier number, so as to acquire the codebook including 80 bits for the HARQ feedback information.

Circumstance 2: when the UE has performed the LBT detection within the subframe 9 unsuccessfully and no HARQ feedback information is transmitted within the subframe 9, the UE may generate feedback bits 1111100000000000 for the carriers 6 to 9 within the subframe 10 and generate feedback bits 0010100100011000 for the carrier 10 within the subframe 10. Then, the UE may cascade the feedback bits for each carrier in accordance with the carrier number, so as to acquire the codebook including 80 bits for the HARQ feedback information.

A mode for transmitting by the UE the HARQ feedback information within the subframe 10 may be similar to that within the subframe 9, and thus will not be particularly defined herein.

### Example 2

In this example, 10 number of carriers are aggregated at the UE, where a carrier 1 is a licensed primary carrier, and carriers 2 to 10 are non-licensed carriers. In addition, the carriers 1 to 5 belong to a carrier group A, and the carriers 6 to 10 belong to a carrier group B. In the carrier group A, the HARQ feedback information is transmitted by the UE to the base station using a conventional CA mode, so in this example, the transmission of the HARQ feedback information in the carrier group B will be described hereinafter.

The base station may schedule double-codeword downlink transmission within subframes 1 to 3 and subframes 5, 6 of the carriers 6 to 8. The base station may indicate through DCI a 2-bit C-DAI in the time domain and a 2-bit T-DAI, i.e., the C-DAIs 1, 2 and 3 are included within the subframes 1 to 3, the C-DAI 4 is included within the subframe 5, and the C-DAI 1 and the T-DAI 1 are included within the subframe 6. The base station may transmit the indication information within the subframe 5 of the carrier 7, so as to schedule the UE to transmit the PUSCH within the subframe 10 of the carrier 7. The indication information may further include 1-bit indication information for indicating the UE to transmit the HARQ feedback information within the subframe 10 simultaneously.

Upon the receipt of the indication information, the UE may determine the size of the codebook as 5*5*2=50 bits in accordance with the C-DAI in the time domain, the T-DAI, the quantity of the configured carriers (i.e., 5) and the quantity of the TBs (i.e., 2). Then, the UE may map the feedback bits corresponding to the TBs to the codebook in a frequency-domain-before-time-domain manner (or in a time-domain-before-frequency-domain manner. When the UE has correctly received all the TBs, in the codebook, 10 number of feedback bits 1111110000 to be transmitted within the subframe 1 may be generated for the carriers 6 to 10 (no downlink data is transmitted on the carriers 9 and 10, so the feedback bit is 0), 10 number of feedback bits 1111110000 to be transmitted within the subframe 2 may be generated for the carriers 6 to 10, 10 number of feedback bits 1111110000 to be transmitted within the subframe 3 may be generated, 10 number of feedback bits 1111110000 to be transmitted within the subframe 5 may be generated, and 10 number of feedback bits 1111110000 to be transmitted within the subframe 6 may be generated. Then, the feedback bits for each carrier may be cascaded in accordance with the carrier number, so as to acquire the codebook having 50 bits.

The HARQ feedback information may be transmitted in a punching manner within the transmission subframe for the HARQ ACK feedback information. When the HARQ feedback information occupies 75 REs within the transmission subframe, the 75 REs at both sides of the pilot signal may be transmitted in a punching manner on the PRBs for scheduling the transmission of the PUSCH data.

### Example 3

In this example, 10 number of carriers are aggregated at the UE, where a carrier 1 is a licensed primary carrier, and carriers 2 to 10 are non-licensed carriers. In addition, the carriers 1 to 5 belong to a carrier group A, and the carriers 6 to 10 belong to a carrier group B. In the carrier group A, the HARQ feedback information is transmitted by the UE to the base station using a conventional CA mode, so in this embodiment, the transmission of the HARQ feedback information in the carrier group B will be described hereinafter.

The base station may schedule double-codeword downlink transmission within subframes 1 to 3 and subframes 5, 6 of the carriers 6 to 8. The base station may indicate through DCI a 2-bit C-DAI in both the time domain and the frequency domain and a 2-bit T-DAI, i.e., the C-DAIs 1, 2 and 3 are included within the subframes 1 of the carriers 6 to 8, the C-DAIs 4, 1 and 2 are included within the subframes 2 of the carriers 6 to 8, the C-DAIs 3, 4 and 1 are included within the subframes 3 of the carriers 6 to 8, the C-DAIs 2, 3 and 4 are included within the subframes 5 of the carriers 6 to 8, and the C-DAIs 1, 2 and 3 and a T-DAI 3 are included within the subframes 6 of the carriers 6 to 8. The base station may transmit the indication information within the subframe 5 of the carrier 7, so as to schedule the UE to transmit the PUSCH within the subframe 10 of the carrier 7. The indication information may further include 1-bit indication information for indicating the UE to transmit the HARQ feedback information within the subframe 10 simultaneously. Upon the receipt of the indication information, the UE may determine the size of the codebook as 5*5*2=50 bits in accordance with the C-DAI in the time domain, the T-DAI, the quantity of the configured carriers (i.e., 5) and the quantity of the TBs (i.e., 2). Then, the UE may map the feedback bits corresponding to the TBs to the codebook in a frequency-domain-before-time-domain manner (or in a time-domain-before-frequency-domain manner. When the UE has correctly received all the TBs, in the codebook, 10 number of feedback bits 1111110000 to be transmitted within the subframe 1 may be generated for the carriers 6 to 10 (no downlink data is transmitted on the carriers 9 and 10, so the feedback bit is 0), 10 number of feedback bits 1111110000 to be transmitted within the subframe 2 may be generated for the carriers 6 to 10, 10 number of feedback bits 1111110000 to be transmitted within the subframe 3 may be generated, 10 number of feedback bits 1111110000 to be transmitted within the subframe 5 may be generated, and 10 number of feedback bits 1111110000 to be transmitted within the subframe 6 may be generated. Then, the feedback bits for each carrier may be cascaded in accordance with the carrier number, so as to acquire the codebook having 50 bits.

The HARQ feedback information and the uplink data may be transmitted in a multiplexing manner within the transmission subframe. To be specific, the HARQ feedback information and the uplink data may be cascaded, interleaved, modulated, and then mapped to all the available REs within the subframe 10 for the transmission. The present disclosure further provides in some embodiments a UE 40, which as shown in FIG. 4, includes: a reception module 41 configured to receive indication information from a base station, the indication information being configured to indicate a transmission subframe for transmitting the HARQ feedback information in a carrier; a generation module 42 configured to generate the HARQ feedback information; and a transmission module 43 configured to transmit the HARQ feedback information to the base station within the transmission subframe.

In a possible embodiment of the present disclosure, the HARQ feedback information includes HARQ ACK feedback information or HARQ NACK feedback information. In a possible embodiment of the present disclosure, the indication information is uplink scheduling signaling for scheduling the transmission of a physical uplink channel.

In a possible embodiment of the present disclosure, the uplink scheduling signaling is configured to indicate through x bits whether the HARQ feedback information is to be transmitted within subframes scheduled by the uplink scheduling signal, where x is a positive integer greater than or equal to 1.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

In a possible embodiment of the present disclosure, the uplink scheduling signaling is configured to indicate that merely the HARQ feedback information is transmitted within the subframes scheduled by the uplink scheduling signal through a specific bit field setting.

In a possible embodiment of the present disclosure, the indication information is signaling for scheduling the transmission of the HARQ feedback information.

In a possible embodiment of the present disclosure, the signaling is configured to indicate through x bits whether the HARQ feedback information is to be transmitted within subframes scheduled by the signaling, where x is a positive integer greater than or equal to 1.

In a possible embodiment of the present disclosure, the generation module 42 may be further configured to determine a size of a codebook for the HARQ feedback information, and generate the HARQ feedback information in accordance with the size of the codebook.

In a possible embodiment of the present disclosure, the generation module 42 may be further configured to determine the size of the codebook for the HARQ feedback information in accordance with target information. The target information may include one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

In a possible embodiment of the present disclosure, the generation module 42 may be further configured to determine the size of the codebook for the HARQ feedback information in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station. In a possible embodiment of the present disclosure, the generation module 42 may be further configured to: cascade feedback bits for at least one carrier in accordance with a carrier number to acquire the codebook, and generate the HARQ feedback information in accordance with the size of the codebook, the feedback bits for each carrier being ranked in accordance with a process number; or rank HARQ feedback bits in accordance with the C-DAI in both the frequency domain and the time domain to acquire the codebook, and generate the HARQ feedback information in accordance with the size of the codebook; or cascade the feedback bits for at least one carrier in accordance with the carrier number to acquire the codebook, and generate the HARQ feedback information in accordance with the size of the codebook, the feedback bits for each carrier being ranked in accordance with the C-DAI in the time domain.

In a possible embodiment of the present disclosure, the reception module 41 may be further configured to receive a plurality of pieces of indication information from the base station on one or more carriers within a same downlink subframe, each piece of indication information being configured to indicate the transmission subframe for transmitting the HARQ feedback information in different carriers. The transmission module 43 may be further configured to transmit the same HARQ feedback information to the base station within the transmission subframes on a plurality of carriers indicated by the plurality of pieces of indication information, or transmit the HARQ feedback information to the base station within a specific transmission subframe, the specific transmission subframe including one or more subframes of the transmission subframes indicated by the plurality of pieces of indication information. In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information.

In a possible embodiment of the present disclosure, the transmission module 43 may be further configured to: select a transmission subframe, which belongs to a carrier preconfigured by the base station, from the transmission subframes indicated by the plurality of pieces of indication information, and transmit the HARQ feedback information to the base station within the transmission subframe; or select a transmission subframe in a carrier with a minimum number from the transmission subframes indicated by the plurality of pieces of indication information, and transmit the HARQ feedback information to the base station within the transmission subframe; or select one or more transmission subframes from the transmission subframes indicated by the plurality of pieces of indication information in accordance with a dynamic indicator from the base station, and transmit the HARQ feedback information to the base station within the selected one or more transmission subframes.

In a possible embodiment of the present disclosure, the dynamic indicator is uplink scheduling signaling, and trigger signaling for the HARQ feedback information is carried in the uplink scheduling signaling.

In a possible embodiment of the present disclosure, the transmission module 43 may be further configured to perform LBT detection on the transmission subframe, and when the LBT detection is performed successfully, transmit the HARQ feedback information to the base station within the transmission subframe.

In a possible embodiment of the present disclosure, the transmission module 43 may be further configured to transmit merely the HARQ feedback information to the base station within the transmission subframe, or transmit the HARQ feedback information and uplink data to the base station within the transmission subframe.

In a possible embodiment of the present disclosure, when the UE transmits both the HARQ feedback information and the uplink data to the base station within the transmission subframe, the HARQ feedback information is mapped to symbols which are located at both sides of a pilot signal within the transmission subframe and configured to transmit the uplink data; or when the UE transmits both the HARQ feedback information and the uplink data to the base station within the transmission subframe, the HARQ feedback information and the uplink data are transmitted in a multiplexing manner; or when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

In a possible embodiment of the present disclosure, when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

It should be appreciated that, the implementation of the UE 40 may refer to that mentioned in the embodiments as shown in FIGs.1-3 with a same beneficial effect, which will not be particularly defined herein.

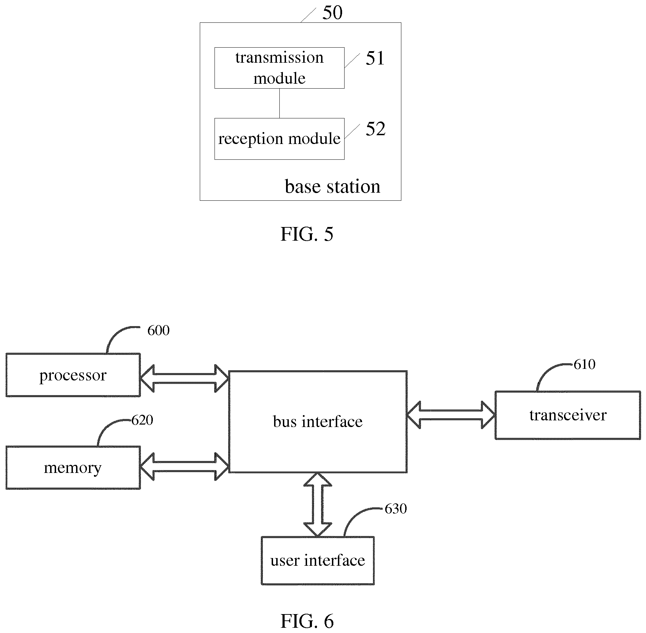

The present disclosure further provides in some embodiments a base station 50 which, as shown in FIG. 5, includes: a transmission module 51 configured to transmit indication information to a UE, the indication information being configured to indicate a transmission subframe for transmitting the HARQ feedback information in a carrier; and a reception module 52 configured to receive the HARQ feedback information transmitted within the transmission subframe from the UE, the HARQ feedback information being generated by the UE.

In a possible embodiment of the present disclosure, the HARQ feedback information includes HARQ ACK feedback information or HARQ NACK feedback information. In a possible embodiment of the present disclosure, the indication information is uplink scheduling signaling for scheduling the transmission of a physical uplink channel.

In a possible embodiment of the present disclosure, the uplink scheduling signaling is configured to indicate through x bits whether the HARQ feedback information is to be transmitted within subframes scheduled by the uplink scheduling signal, where x is a positive integer greater than or equal to 1.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

In a possible embodiment of the present disclosure, the uplink scheduling signaling is configured to indicate that merely the HARQ feedback information is transmitted within the subframes scheduled by the uplink scheduling signal through a specific bit field setting.

In a possible embodiment of the present disclosure, the indication information is signaling for scheduling the transmission of the HARQ feedback information.

In a possible embodiment of the present disclosure, the signaling is configured to indicate through x bits whether the HARQ feedback information is to be transmitted within subframes scheduled by the signaling, where x is a positive integer greater than or equal to 1.

In a possible embodiment of the present disclosure, the UE is configured to determine a size of a codebook for the HARQ feedback information, and generate the HARQ feedback information in accordance with the size of the codebook.

In a possible embodiment of the present disclosure, the size of the codebook for the HARQ feedback information is determined by the UE in accordance with target information, and the target information includes one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

In a possible embodiment of the present disclosure, the size of the codebook for the HARQ feedback information is determined by the UE in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station.

In a possible embodiment of the present disclosure, the HARQ feedback information is generated through: cascading, by the UE, feedback bits for at least one carrier in accordance with a carrier number to acquire the codebook, and generating the HARQ feedback information in accordance with the size of the codebook, the feedback bits for each carrier being ranked in accordance with a process number; or ranking, by the UE, HARQ feedback bits in accordance with the C-DAI in both the frequency domain and the time domain to acquire the codebook, and generating the HARQ feedback information in accordance with the size of the codebook; or cascading, by the UE, the feedback bits for at least one carrier in accordance with the carrier number to acquire the codebook, and generating the HARQ feedback information in accordance with the size of the codebook, the feedback bits for each carrier being ranked in accordance with the C-DAI in the time domain.

In a possible embodiment of the present disclosure, the transmission module 51 may be further configured to transmit a plurality of pieces of indication information to the UE on one or more carriers within a same downlink subframe, each piece of indication information being configured to indicate the transmission subframe for transmitting the HARQ feedback information in different carriers. The reception module 52 may be further configured to receive from the UE the same HARQ feedback information within the transmission subframes on a plurality of carriers indicated by the plurality of pieces of indication information, or receive from the UE the HARQ feedback information within a specific transmission subframe, the specific transmission subframe including one or more subframes of the transmission subframes indicated by the plurality of pieces of indication information.

In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information.

In a possible embodiment of the present disclosure, the reception module 52 may be further configured to: receive from the UE the HARQ feedback information transmitted within at least one transmission subframe, the at least one transmission subframe being a transmission subframe which is selected by the UE from the transmission subframes indicated by the plurality of pieces of indication information and which belongs to a carrier preconfigured by the base station; or receive from the UE the HARQ feedback information transmitted within a transmission subframe, the transmission subframe being a transmission subframe in a carrier with a minimum number which is selected by the UE from the transmission subframes indicated by the plurality of pieces of indication information; receive from the UE the HARQ feedback information transmitted within at least one transmission subframe, the at least one transmission subframe including one or more transmission subframes which are selected from the transmission subframes indicated by the plurality of pieces of indication information in accordance with a dynamic indicator from the base station. In a possible embodiment of the present disclosure, the dynamic indicator is uplink scheduling signaling, and trigger signaling for the HARQ feedback information is carried in the uplink scheduling signaling.

In a possible embodiment of the present disclosure, when the UE transmits the HARQ feedback information to the base station within the transmission subframe, the UE is configured to perform LBT detection on the transmission subframe, and when the LBT detection is performed successfully, transmit the HARQ feedback information to the base station within the transmission subframe.

In a possible embodiment of the present disclosure, the reception module 52 may be further configured to receive the HARQ feedback information merely transmitted within the transmission subframe from the UE, or receive the HARQ feedback information and uplink data transmitted within the transmission subframe from the UE.

In a possible embodiment of the present disclosure, when the UE transmits both the HARQ feedback information and the uplink data to the base station within the transmission subframe, the HARQ feedback information is mapped to symbols which are located at both sides of a pilot signal within the transmission subframe and configured to transmit the uplink data; or when the UE transmits both the HARQ feedback information and the uplink data to the base station within the transmission subframe, the HARQ feedback information and the uplink data are transmitted in a multiplexing manner; or when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

In a possible embodiment of the present disclosure, when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

It should be appreciated that, the implementation of the base station 50 may refer to that of the embodiments as shown in FIGs.1-3 with a same beneficial effect, which will not be particularly defined herein.

The present disclosure further provides in some embodiments a UE which, as shown in FIG. 6, includes a processor 600, a transceiver 610, a memory 620, a user interface 630 and a bus interface. The processor 600 is configured to read a program stored in the memory 620, so as to: receive through the transceiver 610 indication information from a base station, the indication information being configured to indicate a transmission subframe for transmitting the HARQ feedback information in a carrier; generate the HARQ feedback information; and transmit through the transceiver 610 the HARQ feedback information to the base station within the transmission subframe. The transceiver 610 is configured to receive and transmit data under the control of the processor 600.

In FIG. 6, bus architecture may include a number of buses and bridges connected to each other, so as to connect various circuits for one or more processors 600 and one or more memories 620. In addition, as is known in the art, the bus architecture may be used to connect any other circuits, such as a circuit for a peripheral device, a circuit for a voltage stabilizer and a power management circuit, which are not particularly defined herein. The bus interface may be provided, and the transceiver 610 may consist of a plurality of elements, i.e., a transmitter and a receiver for communication with any other devices over a transmission medium. With respect to different UEs, the user interface 630 may also be provided for devices which are to be arranged inside or outside the UE, and these devices may include but not limited to a keypad, a display, a speaker, a microphone and a joystick. The processor 600 may take charge of managing the bus architecture as well general processings. The memory 620 may store data therein for the operation of the processor 600.

In a possible embodiment of the present disclosure, the HARQ feedback information includes HARQ ACK feedback information or HARQ NACK feedback information. In a possible embodiment of the present disclosure, the indication information is uplink scheduling signaling for scheduling the transmission of a physical uplink channel.

In a possible embodiment of the present disclosure, the uplink scheduling signaling is configured to indicate through x bits whether the HARQ feedback information is to be transmitted within subframes scheduled by the uplink scheduling signal, where x is a positive integer greater than or equal to 1.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

In a possible embodiment of the present disclosure, the uplink scheduling signaling is configured to indicate that merely the HARQ feedback information is transmitted within the subframes scheduled by the uplink scheduling signal through a specific bit field setting.

In a possible embodiment of the present disclosure, the indication information is signaling for scheduling the transmission of the HARQ feedback information.

In a possible embodiment of the present disclosure, the signaling is configured to indicate through x bits whether the HARQ feedback information is to be transmitted within subframes scheduled by the signaling, where x is a positive integer greater than or equal to 1.

In a possible embodiment of the present disclosure, the processor 600 is further configured to determine a size of a codebook for the HARQ feedback information, and generate the HARQ feedback information in accordance with the size of the codebook.

In a possible embodiment of the present disclosure, the processor 600 is further configured to determine the size of the codebook for the HARQ feedback information in accordance with target information. The target information includes one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

In a possible embodiment of the present disclosure, the processor 600 is further configured to determine the size of the codebook for the HARQ feedback information in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station.

In a possible embodiment of the present disclosure, the processor 600 is further configured to: cascade feedback bits for at least one carrier in accordance with a carrier number to acquire the codebook, and generate the HARQ feedback information in accordance with the size of the codebook, the feedback bits for each carrier being ranked in accordance with a process number; or rank HARQ feedback bits in accordance with the C-DAI in both the frequency domain and the time domain to acquire the codebook, and generate the HARQ feedback information in accordance with the size of the codebook; or cascade the feedback bits for at least one carrier in accordance with the carrier number to acquire the codebook, and generate the HARQ feedback information in accordance with the size of the codebook, the feedback bits for each carrier being ranked in accordance with the C-DAI in the time domain.

In a possible embodiment of the present disclosure, the processor 600 is further configured to receive a plurality of pieces of indication information from the base station on one or more carriers within a same downlink subframe, each piece of indication information being configured to indicate the transmission subframe for transmitting the HARQ feedback information in different carriers. The processor 600 is further configured to transmit the same HARQ feedback information to the base station within the transmission subframes on a plurality of carriers indicated by the plurality of pieces of indication information, or transmit the HARQ feedback information to the base station within a specific transmission subframe, the specific transmission subframe including one or more subframes of the transmission subframes indicated by the plurality of pieces of indication information.

In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information.

In a possible embodiment of the present disclosure, the processor 600 is further configured to: select a transmission subframe, which belongs to a carrier preconfigured by the base station, from the transmission subframes indicated by the plurality of pieces of indication information, and transmit the HARQ feedback information to the base station within the transmission subframe; or select a transmission subframe in a carrier with a minimum number from the transmission subframes indicated by the plurality of pieces of indication information, and transmit the HARQ feedback information to the base station within the transmission subframe; or select one or more transmission subframes from the transmission subframes indicated by the plurality of pieces of indication information in accordance with a dynamic indicator from the base station, and transmit the HARQ feedback information to the base station within the selected one or more transmission subframes.

In a possible embodiment of the present disclosure, the dynamic indicator is uplink scheduling signaling, and trigger signaling for the HARQ feedback information is carried in the uplink scheduling signaling.

In a possible embodiment of the present disclosure, the processor 600 is further configured to perform LBT detection on the transmission subframe, and when the LBT detection is performed successfully, transmit the HARQ feedback information to the base station within the transmission subframe.

In a possible embodiment of the present disclosure, the processor 600 is further configured to transmit merely the HARQ feedback information to the base station within the transmission subframe, or transmit the HARQ feedback information and uplink data to the base station within the transmission subframe.

In a possible embodiment of the present disclosure, when the UE transmits both the HARQ feedback information and the uplink data to the base station within the transmission subframe, the HARQ feedback information is mapped to symbols which are located at both sides of a pilot signal within the transmission subframe and configured to transmit the uplink data; or when the UE transmits both the HARQ feedback information and the uplink data to the base station within the transmission subframe, the HARQ feedback information and the uplink data are transmitted in a multiplexing manner; or when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

In a possible embodiment of the present disclosure, when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

It should be appreciated that, the implementation of the UE may refer to that mentioned in the embodiments as shown in FIGs.1-3 with a same beneficial effect, and thus will not be particularly defined herein.

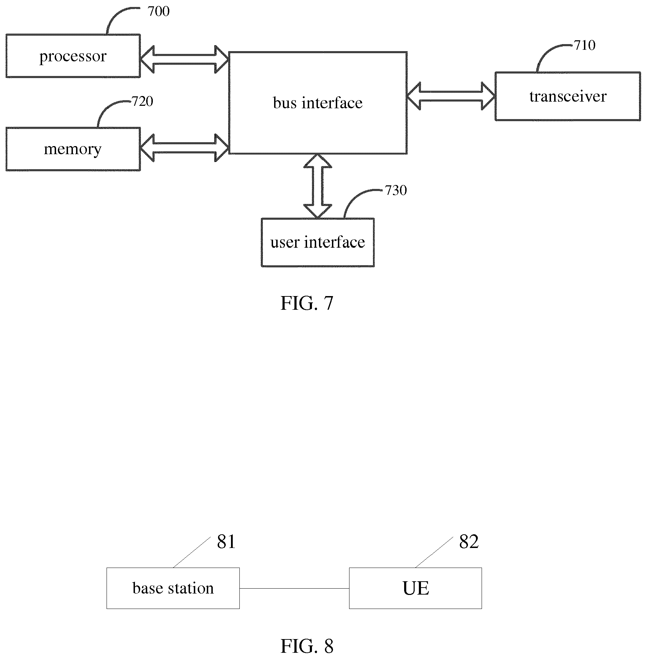

The present disclosure further provides in some embodiments a base station which, as shown in FIG. 7, includes a processor 700, a transceiver 710, a memory 720, a user interface 730 and a bus interface. The processor 700 is configured to read a program stored in the memory 720, so as to: transmit through the transceiver 710 indication information to a UE, the indication information being configured to indicate a transmission subframe for transmitting the HARQ feedback information in a carrier; and receive through the transceiver 710 the HARQ feedback information transmitted within the transmission subframe from the UE, the HARQ feedback information being generated by the UE. The transceiver 710 is configured to receive and transmit data under the control of the processor 700.

In FIG. 7, bus architecture may include a number of buses and bridges connected to each other, so as to connect various circuits for one or more processors 700 and one or more memories 720. In addition, as is known in the art, the bus architecture may be used to connect any other circuits, such as a circuit for a peripheral device, a circuit for a voltage stabilizer and a power management circuit, which are not particularly defined herein. The bus interface may be provided, and the transceiver 710 may consist of a plurality of elements, i.e., a transmitter and a receiver for communication with any other devices over a transmission medium. With respect to different UEs, the user interface 730 may also be provided for devices which are to be arranged inside or outside the UE, and these devices may include but not limited to a keypad, a display, a speaker, a microphone and a joystick. The processor 700 may take charge of managing the bus architecture as well general processings. The memory 720 may store data therein for the operation of the processor 700.

In a possible embodiment of the present disclosure, the HARQ feedback information includes HARQ ACK feedback information or HARQ NACK feedback information. In a possible embodiment of the present disclosure, the indication information is uplink scheduling signaling for scheduling the transmission of a physical uplink channel.

In a possible embodiment of the present disclosure, the uplink scheduling signaling is configured to indicate through x bits whether the HARQ feedback information is to be transmitted within subframes scheduled by the uplink scheduling signal, where x is a positive integer greater than or equal to 1.

In a possible embodiment of the present disclosure, the HARQ feedback information includes HARQ feedback information generated by the UE within all downlink subframes which are located before a third subframe upstream of the subframe scheduled by the uplink scheduling signal and within which no HARQ feedback is performed.

In a possible embodiment of the present disclosure, the uplink scheduling signaling is configured to indicate that merely the HARQ feedback information is transmitted within the subframes scheduled by the uplink scheduling signal through a specific bit field setting.

In a possible embodiment of the present disclosure, the indication information is signaling for scheduling the transmission of the HARQ feedback information.

In a possible embodiment of the present disclosure, the signaling is configured to indicate through x bits whether the HARQ feedback information is to be transmitted within subframes scheduled by the signaling, where x is a positive integer greater than or equal to 1.

In a possible embodiment of the present disclosure, the UE is configured to determine a size of a codebook for the HARQ feedback information, and generate the HARQ feedback information in accordance with the size of the codebook.

In a possible embodiment of the present disclosure, the size of the codebook for the HARQ feedback information is determined by the UE in accordance with target information, and the target information includes one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

In a possible embodiment of the present disclosure, the size of the codebook for the HARQ feedback information is determined by the UE in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

In a possible embodiment of the present disclosure, the quantity of the TBs is determined in accordance with a transmission mode adopted by a carrier, or in accordance with a configuration of the base station, or in accordance with both the transmission mode adopted by the carrier and the configuration of the base station.

In a possible embodiment of the present disclosure, the HARQ feedback information is generated through: cascading, by the UE, feedback bits for at least one carrier in accordance with a carrier number to acquire the codebook, and generating the HARQ feedback information in accordance with the size of the codebook, the feedback bits for each carrier being ranked in accordance with a process number; or ranking, by the UE, HARQ feedback bits in accordance with the C-DAI in both the frequency domain and the time domain to acquire the codebook, and generating the HARQ feedback information in accordance with the size of the codebook; or cascading, by the UE, the feedback bits for at least one carrier in accordance with the carrier number to acquire the codebook, and generating the HARQ feedback information in accordance with the size of the codebook, the feedback bits for each carrier being ranked in accordance with the C-DAI in the time domain.

In a possible embodiment of the present disclosure, the processor 700 is further configured to transmit a plurality of pieces of indication information to the UE on one or more carriers within a same downlink subframe, each piece of indication information being configured to indicate the transmission subframe for transmitting the HARQ feedback information in different carriers. The reception module is further configured to receive from the UE the same HARQ feedback information within the transmission subframes on a plurality of carriers indicated by the plurality of pieces of indication information, or receive from the UE the HARQ feedback information within a specific transmission subframe, the specific transmission subframe including one or more subframes of the transmission subframes indicated by the plurality of pieces of indication information.

In a possible embodiment of the present disclosure, when the UE is configured by the base station with a group of carriers for uplink control information, the HARQ feedback information is HARQ feedback information corresponding to a downlink subframe of a carrier in the group of carriers for the uplink control information.

In a possible embodiment of the present disclosure, the processor 700 is further configured to: receive from the UE the HARQ feedback information transmitted within at least one transmission subframe, the at least one transmission subframe being a transmission subframe which is selected by the UE from the transmission subframes indicated by the plurality of pieces of indication information and which belongs to a carrier preconfigured by the base station; or receive from the UE the HARQ feedback information transmitted within a transmission subframe, the transmission subframe being a transmission subframe in a carrier with a minimum number which is selected by the UE from the transmission subframes indicated by the plurality of pieces of indication information; receive from the UE the HARQ feedback information transmitted within at least one transmission subframe, the at least one transmission subframe including one or more transmission subframes which are selected from the transmission subframes indicated by the plurality of pieces of indication information in accordance with a dynamic indicator from the base station. In a possible embodiment of the present disclosure, the dynamic indicator is uplink scheduling signaling, and trigger signaling for the HARQ feedback information is carried in the uplink scheduling signaling.

In a possible embodiment of the present disclosure, when the UE transmits the HARQ feedback information to the base station within the transmission subframe, the UE is configured to perform LBT detection on the transmission subframe, and when the LBT detection is performed successfully, transmit the HARQ feedback information to the base station within the transmission subframe.

In a possible embodiment of the present disclosure, the processor 700 is further configured to receive the HARQ feedback information merely transmitted within the transmission subframe from the UE, or receive the HARQ feedback information and uplink data transmitted within the transmission subframe from the UE.

In a possible embodiment of the present disclosure, when the UE transmits both the HARQ feedback information and the uplink data to the base station within the transmission subframe, the HARQ feedback information is mapped to symbols which are located at both sides of a pilot signal within the transmission subframe and configured to transmit the uplink data; or when the UE transmits both the HARQ feedback information and the uplink data to the base station within the transmission subframe, the HARQ feedback information and the uplink data are transmitted in a multiplexing manner; or when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

In a possible embodiment of the present disclosure, when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

It should be appreciated that, the implementation of the base station may refer to that mentioned in the embodiments as shown in FIGs.1-3 with a same beneficial effect, and thus will not be particularly defined herein.

The present disclosure further provides in some embodiments a system for transmitting HARQ feedback information which, as shown in FIG. 8, includes: a base station 81 configured to transmit indication information to a UE 82, the indication information being configured to indicate a transmission subframe for transmitting the HARQ feedback information in a carrier; and the UE 82 configured to receive the indication information from the base station, generate the HARQ feedback information, and transmit the HARQ feedback information to the base station 81 within the transmission subframe. The base station 81 is further configured to receive the HARQ feedback information transmitted within the transmission subframe from the UE.

It should be appreciated that, the implementation of the base station 81 and the UE 82 may refer to that mentioned in the embodiments as shown in FIGs.1 to 7 with a same beneficial effect, and thus will not be particularly defined herein.

It should be further appreciated that, the device and method may be implemented in any other ways. For example, the embodiments for the apparatus is merely for illustrative purposes, and the modules or units are provided merely on the basis of their logic functions. During the actual application, some modules or units may be combined together or integrated into another system. Alternatively, some functions of the module or units may be omitted or not executed. In addition, the coupling connection, direct coupling connection or communication connection between the modules or units may be implemented via interfaces, and the indirect coupling connection or communication connection between the modules or units may be implemented in an electrical or mechanical form or in any other form.

In addition, the functional units in the embodiments of the present disclosure may be integrated into a processing unit, or the functional units may exist independently, or two or more functional units may be combined together. These units may be implemented in the form of hardware, or hardware plus software.

The functional units implemented in a software form may be stored in a computer-readable medium. These software functional units may be stored in a storage medium and include several instructions so as to enable a computer device (a personal computer, a server or network device) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A method for transmitting Hybrid Automatic Repeat reQuest (HARQ) feedback information, comprising:
receiving, by a User Equipment (UE), indication information from a base station, the indication information being configured to indicate a transmission subframe for transmitting the HARQ feedback information in a carrier;
generating, by the UE, the HARQ feedback information; and
transmitting, by the UE, the HARQ feedback information to the base station within the transmission subframe.

2. The method according to claim 1, wherein the HARQ feedback information comprises HARQ ACKnowledgement (ACK) feedback information or HARQ Non-ACKnowledgement (NACK) feedback information.

3. The method according to claim 1, wherein the indication information is uplink scheduling signaling for scheduling the transmission of a physical uplink channel.

4. The method according to claim 3, wherein the uplink scheduling signaling is configured to indicate through x bits whether the HARQ feedback information is to be transmitted within subframes scheduled by the uplink scheduling signal, where x is a positive integer greater than or equal to 1.

5. The method according to claim 3, wherein the HARQ feedback information comprises HARQ feedback information generated by the UE within all downlink subframes which are located before a third subframe upstream of the subframe scheduled by the uplink scheduling signal and within which no HARQ feedback is performed.

6. The method according to claim 3, wherein the uplink scheduling signaling is configured to indicate that merely the HARQ feedback information is transmitted within the subframes scheduled by the uplink scheduling signal through a specific bit field setting.

7. The method according to claim 1, wherein the indication information is signaling for scheduling the transmission of the HARQ feedback information.

8. The method according to claim 7, wherein the signaling is configured to indicate through x bits whether the HARQ feedback information is to be transmitted within subframes scheduled by the signaling, where x is a positive integer greater than or equal to 1.

9. The method according to any one of claims 1 to 8, wherein the generating, by the UE, the HARQ feedback information comprises determining, by the UE, a size of a codebook for the HARQ feedback information, and generating the HARQ feedback information in accordance with the size of the codebook.

10. The method according to claim 9, wherein the determining, by the UE, the size of the codebook for the HARQ feedback information comprises determining, by the UE, the size of the codebook for the HARQ feedback information in accordance with target information, and the target information comprises one or more of the quantity of downlink processes, the quantity of configured carriers, a Count Downlink Assignment Index (C-DAI) in a time domain, a Total Downlink Assignment Index (T-DAI), a predefined parameter, a size of a feedback window notified by the base station, the quantity of transmission blocks (TBs), and a C-DAI in both a frequency domain and a time domain.

11. The method according to claim 10, wherein the determining, by the UE, the size of the codebook for the HARQ feedback information in accordance with the target information comprises determining, by the UE, the size of the codebook for the HARQ feedback information in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

12. The method according to claim 11, wherein the quantity of the TBs is determined in accordance with a transmission mode adopted by a carrier, or in accordance with a configuration of the base station, or in accordance with both the transmission mode adopted by the carrier and the configuration of the base station.

13. The method according to claim 9, wherein the generating, by the UE, the HARQ feedback information in accordance with the size of the codebook comprises: cascading, by the UE, feedback bits for at least one carrier in accordance with a carrier number to acquire the codebook, and generating the HARQ feedback information in accordance with the size of the codebook, the feedback bits for each carrier being ranked in accordance with a process number; or
ranking, by the UE, HARQ feedback bits in accordance with the C-DAI in both the frequency domain and the time domain to acquire the codebook, and generating the HARQ feedback information in accordance with the size of the codebook; or
cascading, by the UE, the feedback bits for at least one carrier in accordance with the carrier number to acquire the codebook, and generating the HARQ feedback information in accordance with the size of the codebook, the feedback bits for each carrier being ranked in accordance with the C-DAI in the time domain.

14. The method according to claim 1 or 2, wherein the receiving, by the UE, the indication information from the base station comprises receiving, by the UE, a plurality of pieces of indication information from the base station on one or more carriers within a same downlink subframe, each piece of indication information being configured to indicate the transmission subframe for transmitting the HARQ feedback information in different carriers, and
the transmitting, by the UE, the HARQ feedback information to the base station within the transmission subframes comprises transmitting, by the UE, the same HARQ feedback information to the base station within the transmission subframes on a plurality of carriers indicated by the plurality of pieces of indication information, or transmitting, by the UE, the HARQ feedback information to the base station within a specific transmission subframe, the specific transmission subframe comprising one or more subframes of the transmission subframes indicated by the plurality of pieces of indication information.

15. The method according to claim 14, wherein when the UE is configured by the base station with a group of carriers for uplink control information, the HARQ feedback information is HARQ feedback information corresponding to a downlink subframe of a carrier in the group of carriers for the uplink control information.

16. The method according to claim 14, wherein the transmitting, by the UE, the HARQ feedback information to the base station within the special transmission subframe comprises:
selecting, by the UE, a transmission subframe, which belongs to a carrier preconfigured by the base station, from the transmission subframes indicated by the plurality of pieces of indication information, and transmitting the HARQ feedback information to the base station within the transmission subframe; or
selecting, by the UE, a transmission subframe in a carrier with a minimum number from the transmission subframes indicated by the plurality of pieces of indication information, and transmitting the HARQ feedback information to the base station within the transmission subframe; or
selecting, by the UE, one or more transmission subframes from the transmission subframes indicated by the plurality of pieces of indication information in accordance with a dynamic indicator from the base station, and transmitting the HARQ feedback information to the base station within the selected one or more transmission subframes.

17. The method according to claim 16, wherein the dynamic indicator is uplink scheduling signaling, and trigger signaling for the HARQ feedback information is carried in the uplink scheduling signaling.

18. The method according to claim 1 or 2, wherein the transmitting, by the UE, the HARQ feedback information to the base station within the transmission subframe comprises performing, by the UE, Listen Before Talk (LBT) detection on the transmission subframe, and when the LBT detection is performed successfully, transmitting the HARQ feedback information to the base station within the transmission subframe.

19. The method according to claim 1 or 2, wherein the transmitting, by the UE, the HARQ feedback information to the base station within the transmission subframe comprises transmitting, by the UE, merely the HARQ feedback information to the base station within the transmission subframe, or transmitting, by the UE, both the HARQ feedback information and uplink data to the base station within the transmission subframe.

20. The method according to claim 19, wherein when the UE transmits both the HARQ feedback information and the uplink data to the base station within the transmission subframe, the HARQ feedback information is mapped to symbols which are located at both sides of a pilot signal within the transmission subframe and configured to transmit the uplink data; or
when the UE transmits both the HARQ feedback information and the uplink data to the base station within the transmission subframe, the HARQ feedback information and the uplink data are transmitted in a multiplexing manner; or
when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

21. The method according to claim 20, wherein when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or
when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

22. A method for transmitting HARQ feedback information, comprising: transmitting, by a base station, indication information to a UE, the indication information being configured to indicate a transmission subframe for transmitting the HARQ feedback information in a carrier; and receiving, by the base station, the HARQ feedback information transmitted within the transmission subframe from the UE, the HARQ feedback information being generated by the UE.

23. The method according to claim 22, wherein the HARQ feedback information comprises HARQ ACK feedback information or HARQ NACK feedback information.

24. The method according to claim 22, wherein the indication information is uplink scheduling signaling for scheduling the transmission of a physical uplink channel.

25. The method according to claim 24, wherein the uplink scheduling signaling is configured to indicate through x bits whether the HARQ feedback information is to be transmitted within subframes scheduled by the uplink scheduling signal, where x is a positive integer greater than or equal to 1.

26. The method according to claim 24, wherein the HARQ feedback information comprises HARQ feedback information generated by the UE within all downlink subframes which are located before a third subframe upstream of the subframe scheduled by the uplink scheduling signal and within which no HARQ feedback is performed.

27. The method according to claim 24, wherein the uplink scheduling signaling is configured to indicate that merely the HARQ feedback information is transmitted within the subframes scheduled by the uplink scheduling signal through a specific bit field setting.

28. The method according to claim 22, wherein the indication information is signaling for scheduling the transmission of the HARQ feedback information.

29. The method according to claim 28, wherein the signaling is configured to indicate through x bits whether the HARQ feedback information is to be transmitted within subframes scheduled by the signaling, where x is a positive integer greater than or equal to 1.

30. The method according to any one of claims 22 to 29, wherein the UE is configured to determine a size of a codebook for the HARQ feedback information, and generate the HARQ feedback information in accordance with the size of the codebook.

31. The method according to claim 30, wherein the size of the codebook for the HARQ feedback information is determined by the UE in accordance with target information, and the target information comprises one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

32. The method according to claim 31, wherein the size of the codebook for the HARQ feedback information is determined by the UE in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

33. The method according to claim 32, wherein the quantity of the TBs is determined in accordance with a transmission mode adopted by a carrier, or in accordance with a configuration of the base station, or in accordance with both the transmission mode adopted by the carrier and the configuration of the base station.

34. The method according to claim 30, wherein the HARQ feedback information is generated through: cascading, by the UE, feedback bits for at least one carrier in accordance with a carrier number to acquire the codebook, and generating the HARQ feedback information in accordance with the size of the codebook, the feedback bits for each carrier being ranked in accordance with a process number; or
ranking, by the UE, HARQ feedback bits in accordance with the C-DAI in both the frequency domain and the time domain to acquire the codebook, and generating the HARQ feedback information in accordance with the size of the codebook; or
cascading, by the UE, the feedback bits for at least one carrier in accordance with the carrier number to acquire the codebook, and generating the HARQ feedback information in accordance with the size of the codebook, the feedback bits for each carrier being ranked in accordance with the C-DAI in the time domain.

35. The method according to claim 22 or 23, wherein the transmitting, by the base station, the indication information to the UE comprises transmitting, by the base station, a plurality of pieces of indication information to the UE on one or more carriers within a same downlink subframe, each piece of indication information being configured to indicate the transmission subframe for transmitting the HARQ feedback information in different carriers, and
the receiving, by the base station, the HARQ feedback information transmitted within the transmission subframe from the UE comprises receiving, by the base station, from the UE the same HARQ feedback information within the transmission subframes on a plurality of carriers indicated by the plurality of pieces of indication information, or receiving from the UE the HARQ feedback information within a specific transmission subframe, the specific transmission subframe comprising one or more subframes of the transmission subframes indicated by the plurality of pieces of indication information.

36. The method according to claim 35, wherein when the UE is configured by the base station with a group of carriers for uplink control information, the HARQ feedback information is HARQ feedback information corresponding to a downlink subframe of a carrier in the group of carriers for the uplink control information.

37. The method according to claim 35, wherein the receiving, by the base station, from the UE the HARQ feedback information transmitted within the specific transmission subframe comprises: receiving, by the base station, from the UE the HARQ feedback information transmitted within at least one transmission subframe, the at least one transmission subframe being a transmission subframe which is selected by the UE from the transmission subframes indicated by the plurality of pieces of indication information and which belongs to a carrier preconfigured by the base station; or
receiving, by the base station, from the UE the HARQ feedback information transmitted within a transmission subframe, the transmission subframe being a transmission subframe in a carrier with a minimum number which is selected by the UE from the transmission subframes indicated by the plurality of pieces of indication information; or
receiving, by the base station, from the UE the HARQ feedback information transmitted within at least one transmission subframe, the at least one transmission subframe comprising one or more transmission subframes which are selected from the transmission subframes indicated by the plurality of pieces of indication information in accordance with a dynamic indicator from the base station.

38. The method according to claim 37, wherein the dynamic indicator is uplink scheduling signaling, and trigger signaling for the HARQ feedback information is carried in the uplink scheduling signaling.

39. The method according to claim 22 or 23, wherein when the UE transmits the HARQ feedback information to the base station within the transmission subframe, the UE is configured to perform LBT detection on the transmission subframe, and when the LBT detection is performed successfully, transmit the HARQ feedback information to the base station within the transmission subframe.

40. The method according to claim 22 or 23, wherein the receiving, by the base station, the HARQ transmission information transmitted within the transmission subframe from the UE comprises receiving, by the base station, the HARQ feedback information merely transmitted within the transmission subframe from the UE, or
receiving, by the base station, both the HARQ feedback information and uplink data transmitted within the transmission subframe from the UE.

41. The method according to claim 40, wherein when the UE transmits both the HARQ feedback information and the uplink data to the base station within the transmission subframe, the HARQ feedback information is mapped to symbols which are located at both sides of a pilot signal within the transmission subframe and configured to transmit the uplink data; or
when the UE transmits both the HARQ feedback information and the uplink data to the base station within the transmission subframe, the HARQ feedback information and the uplink data are transmitted in a multiplexing manner; or
when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

42. The method according to claim 41, wherein when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or
when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

43. A User Equipment (UE), comprising:
a reception module configured to receive indication information from a base station, the indication information being configured to indicate a transmission subframe for transmitting the HARQ feedback information in a carrier;
a generation module configured to generate the HARQ feedback information; and
a transmission module configured to transmit the HARQ feedback information to the base station within the transmission subframe.

44. The UE according to claim 43, wherein the HARQ feedback information comprises HARQ ACK feedback information or HARQ NACK feedback information.

45. The UE according to claim 43, wherein the indication information is uplink scheduling signaling for scheduling the transmission of a physical uplink channel.

46. The UE according to claim 45, wherein the uplink scheduling signaling is configured to indicate through x bits whether the HARQ feedback information is to be transmitted within subframes scheduled by the uplink scheduling signal, where x is a positive integer greater than or equal to 1.

47. The UE according to claim 45, wherein the HARQ feedback information comprises HARQ feedback information generated by the UE within all downlink subframes which are located before a third subframe upstream of the subframe scheduled by the uplink scheduling signal and within which no HARQ feedback is performed.

48. The UE according to claim 45, wherein the uplink scheduling signaling is configured to indicate that merely the HARQ feedback information is transmitted within the subframes scheduled by the uplink scheduling signal through a specific bit field setting.

49. The UE according to claim 43, wherein the indication information is signaling for scheduling the transmission of the HARQ feedback information.

50. The UE according to claim 49, wherein the signaling is configured to indicate through x bits whether the HARQ feedback information is to be transmitted within subframes scheduled by the signaling, where x is a positive integer greater than or equal to 1.

51. The UE according to any one of claims 43 to 50, wherein the generation module is further configured to determine a size of a codebook for the HARQ feedback information, and generate the HARQ feedback information in accordance with the size of the codebook.

52. The UE according to claim 51, wherein the generation module is further configured to determine the size of the codebook for the HARQ feedback information in accordance with target information, and the target information comprises one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

53. The UE according to claim 52, wherein the generation module is further configured to determine the size of the codebook for the HARQ feedback information in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

54. The UE according to claim 53, wherein the quantity of the TBs is determined in accordance with a transmission mode adopted by a carrier, or in accordance with a configuration of the base station, or in accordance with both the transmission mode adopted by the carrier and the configuration of the base station.

55. The UE according to claim 51, wherein the generation module is further configured to: cascade feedback bits for at least one carrier in accordance with a carrier number to acquire the codebook, and generate the HARQ feedback information in accordance with the size of the codebook, the feedback bits for each carrier being ranked in accordance with a process number; or
rank HARQ feedback bits in accordance with the C-DAI in both the frequency domain and the time domain to acquire the codebook, and generate the HARQ feedback information in accordance with the size of the codebook; or
cascade the feedback bits for at least one carrier in accordance with the carrier number to acquire the codebook, and generate the HARQ feedback information in accordance with the size of the codebook, the feedback bits for each carrier being ranked in accordance with the C-DAI in the time domain.

56. The UE according to claim 43 or 44, wherein the reception module is further configured to receive a plurality of pieces of indication information from the base station on one or more carriers within a same downlink subframe, each piece of indication information being configured to indicate the transmission subframe for transmitting the HARQ feedback information in different carriers, and
the transmission module is further configured to transmit the same HARQ feedback information to the base station within the transmission subframes on a plurality of carriers indicated by the plurality of pieces of indication information, or transmit the HARQ feedback information to the base station within a specific transmission subframe, the specific transmission subframe comprising one or more subframes of the transmission subframes indicated by the plurality of pieces of indication information.

57. The UE according to claim 56, wherein when the UE is configured by the base station with a group of carriers for uplink control information, the HARQ feedback information is HARQ feedback information corresponding to a downlink subframe of a carrier in the group of carriers for the uplink control information.

58. The UE according to claim 56, wherein the transmission module is further configured to: select a transmission subframe, which belongs to a carrier preconfigured by the base station, from the transmission subframes indicated by the plurality of pieces of indication information, and transmit the HARQ feedback information to the base station within the transmission subframe; or
select a transmission subframe in a carrier with a minimum number from the transmission subframes indicated by the plurality of pieces of indication information, and transmit the HARQ feedback information to the base station within the transmission subframe; or
select one or more transmission subframes from the transmission subframes indicated by the plurality of pieces of indication information in accordance with a dynamic indicator from the base station, and transmit the HARQ feedback information to the base station within the selected one or more transmission subframes.

59. The UE according to claim 58, wherein the dynamic indicator is uplink scheduling signaling, and trigger signaling for the HARQ feedback information is carried in the uplink scheduling signaling.

60. The UE according to claim 43 or 44, wherein the transmission module is further configured to perform LBT detection on the transmission subframe, and when the LBT detection is performed successfully, transmit the HARQ feedback information to the base station within the transmission subframe.

61. The UE according to claim 43 or 44, wherein the transmission module is further configured to transmit merely the HARQ feedback information to the base station within the transmission subframe, or transmit the HARQ feedback information and uplink data to the base station within the transmission subframe.

62. The UE according to claim 61, wherein when the UE transmits both the HARQ feedback information and the uplink data to the base station within the transmission subframe, the HARQ feedback information is mapped to symbols which are located at both sides of a pilot signal within the transmission subframe and configured to transmit the uplink data; or
when the UE transmits both the HARQ feedback information and the uplink data to the base station within the transmission subframe, the HARQ feedback information and the uplink data are transmitted in a multiplexing manner; or
when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

63. The UE according to claim 62, wherein when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or
when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

64. Abase station, comprising:
a transmission module configured to transmit indication information to a UE, the indication information being configured to indicate a transmission subframe for transmitting the HARQ feedback information in a carrier; and
a reception module configured to receive the HARQ feedback information transmitted within the transmission subframe from the UE, the HARQ feedback information being generated by the UE.

65. The base station according to claim 64, wherein the HARQ feedback information comprises HARQ ACK feedback information or HARQ NACK feedback information.

66. The base station according to claim 64, wherein the indication information is uplink scheduling signaling for scheduling the transmission of a physical uplink channel.

67. The base station according to claim 66, wherein the uplink scheduling signaling is configured to indicate through x bits whether the HARQ feedback information is to be transmitted within subframes scheduled by the uplink scheduling signal, where x is a positive integer greater than or equal to 1.

68. The base station according to claim 66, wherein the HARQ feedback information comprises HARQ feedback information generated by the UE within all downlink subframes which are located before a third subframe upstream of the subframe scheduled by the uplink scheduling signal and within which no HARQ feedback is performed.

69. The base station according to claim 66, wherein the uplink scheduling signaling is configured to indicate that merely the HARQ feedback information is transmitted within the subframes scheduled by the uplink scheduling signal through a specific bit field setting.

70. The base station according to claim 64, wherein the indication information is signaling for scheduling the transmission of the HARQ feedback information.

71. The base station according to claim 70, wherein the signaling is configured to indicate through x bits whether the HARQ feedback information is to be transmitted within subframes scheduled by the signaling, where x is a positive integer greater than or equal to 1.

72. The base station according to any one of claims 64 to 71, wherein the UE is configured to determine a size of a codebook for the HARQ feedback information, and generate the HARQ feedback information in accordance with the size of the codebook.

73. The base station according to claim 72, wherein the size of the codebook for the HARQ feedback information is determined by the UE in accordance with target information, and the target information comprises one or more of the quantity of downlink processes, the quantity of configured carriers, a C-DAI in a time domain, a T-DAI, a predefined parameter, a size of a feedback window notified by the base station, the quantity of TBs, and a C-DAI in both a frequency domain and a time domain.

74. The base station according to claim 73, wherein the size of the codebook for the HARQ feedback information is determined by the UE in accordance with the C-DAI in both the frequency domain and the time domain, the T-DAI and the quantity of the TBs, or in accordance with the C-DAI in the time domain, the T-DAI, the quantity of the configured carriers and the quantity of the TBs, or in accordance with the quantity of downlink processes, the quantity of the configured carriers and the quantity of the TBs, or in accordance with the predefined parameter, the quantity of the configured carriers and the quantity of the TBs, or in accordance with the size of the feedback window notified by the base station, the quantity of the configured carriers and the quantity of the TBs.

75. The base station according to claim 74, wherein the quantity of the TBs is determined in accordance with a transmission mode adopted by a carrier, or in accordance with a configuration of the base station, or in accordance with both the transmission mode adopted by the carrier and the configuration of the base station.

76. The base station according to claim 72, wherein the HARQ feedback information is generated through: cascading, by the UE, feedback bits for at least one carrier in accordance with a carrier number to acquire the codebook, and generating the HARQ feedback information in accordance with the size of the codebook, the feedback bits for each carrier being ranked in accordance with a process number; or
ranking, by the UE, HARQ feedback bits in accordance with the C-DAI in both the frequency domain and the time domain to acquire the codebook, and generating the HARQ feedback information in accordance with the size of the codebook; or
cascading, by the UE, the feedback bits for at least one carrier in accordance with the carrier number to acquire the codebook, and generating the HARQ feedback information in accordance with the size of the codebook, the feedback bits for each carrier being ranked in accordance with the C-DAI in the time domain.

77. The base station according to claim 64 or 65, wherein the transmission module is further configured to transmit a plurality of pieces of indication information to the UE on one or more carriers within a same downlink subframe, each piece of indication information being configured to indicate the transmission subframe for transmitting the HARQ feedback information in different carriers, and
the reception module is further configured to receive from the UE the same HARQ feedback information within the transmission subframes on a plurality of carriers indicated by the plurality of pieces of indication information, or receive from the UE the HARQ feedback information within a specific transmission subframe, the specific transmission subframe comprising one or more subframes of the transmission subframes indicated by the plurality of pieces of indication information.

78. The base station according to claim 77, wherein when the UE is configured by the base station with a group of carriers for uplink control information, the HARQ feedback information is HARQ feedback information corresponding to a downlink subframe of a carrier in the group of carriers for the uplink control information.

79. The base station according to claim 77, wherein the reception module is further configured to: receive from the UE the HARQ feedback information transmitted within at least one transmission subframe, the at least one transmission subframe being a transmission subframe which is selected by the UE from the transmission subframes indicated by the plurality of pieces of indication information and which belongs to a carrier preconfigured by the base station; or
receive from the UE the HARQ feedback information transmitted within a transmission subframe, the transmission subframe being a transmission subframe in a carrier with a minimum number which is selected by the UE from the transmission subframes indicated by the plurality of pieces of indication information; or
receive from the UE the HARQ feedback information transmitted within at least one transmission subframe, the at least one transmission subframe comprising one or more transmission subframes which are selected from the transmission subframes indicated by the plurality of pieces of indication information in accordance with a dynamic indicator from the base station.

80. The base station according to claim 79, wherein the dynamic indicator is uplink scheduling signaling, and trigger signaling for the HARQ feedback information is carried in the uplink scheduling signaling.

81. The base station according to claim 64 or 65, wherein when the UE transmits the HARQ feedback information to the base station within the transmission subframe, the UE is configured to perform LBT detection on the transmission subframe, and when the LBT detection is performed successfully, transmit the HARQ feedback information to the base station within the transmission subframe.

82. The base station according to claim 64 or 65, wherein the reception module is further configured to receive the HARQ feedback information merely transmitted within the transmission subframe from the UE, or receive the HARQ feedback information and uplink data transmitted within the transmission subframe from the UE.

83. The base station according to claim 82, wherein when the UE transmits both the HARQ feedback information and the uplink data to the base station within the transmission subframe, the HARQ feedback information is mapped to symbols which are located at both sides of a pilot signal within the transmission subframe and configured to transmit the uplink data; or
when the UE transmits both the HARQ feedback information and the uplink data to the base station within the transmission subframe, the HARQ feedback information and the uplink data are transmitted in a multiplexing manner; or
when the UE transmits both the HARQ feedback information and the uplink data to the base station within the transmission subframe, a modulation symbol for the HARQ feedback information is mapped to y symbols located at both sides of the pilot signal within the transmission subframe, and a modulation symbol for the uplink data is mapped to a resource other than resources occupied by the pilot signal and the modulation symbol for the HARQ feedback information within the transmission subframe, where y is a positive integer greater than or equal to 1.

84. The base station according to claim 83, wherein when the HARQ feedback information and the uplink data are transmitted in a multiplexing manner, the UE is configured to cascade encoding bits of the HARQ feedback information with encoding bits of the uplink data, modulate the cascaded encoding bits in accordance with a modulation order indicated by the base station, and map a modulation result to resources within the transmission subframe in a time-domain-before-frequency-domain manner; or
when the HARQ feedback information and the uplink data are transmitted in a multiplexing manner, the UE is configured to cascade the encoding bits of the HARQ feedback information with the encoding bits of the uplink data, interleave the cascaded encoding bits, modulate an interleaving result in accordance with the modulation order indicated by the base station, and map a modulation result to the resources within the transmission subframe in a time-domain-before-frequency-domain manner.

85. A system for transmitting HARQ feedback information, comprising:
a base station configured to transmit indication information to a UE, the indication information being configured to indicate a transmission subframe for transmitting the HARQ feedback information in a carrier; and
the UE configured to receive the indication information from the base station, generate the HARQ feedback information, and transmit the HARQ feedback information to the base station within the transmission subframe,
wherein the base station is further configured to receive the HARQ feedback information transmitted within the transmission subframe from the UE.

86. A User Equipment (UE), comprising a processor, a transceiver and a memory, wherein the processor is configured to read a program stored in the memory, so as to receive through the transceiver indication information from a base station, the indication information being configured to indicate a transmission subframe for transmitting the HARQ feedback information in a carrier, generate the HARQ feedback information, and transmit through the transceiver the HARQ feedback information to the base station within the transmission subframe, wherein the transceiver is configured to receive and transmit data under the control of the processor.

87. Abase station, comprising a processor, a transceiver and a memory, wherein the processor is configured to read a program stored in the memory, so as to transmit through the transceiver indication information to a UE, the indication information being configured to indicate a transmission subframe for transmitting the HARQ feedback information in a carrier, and receive through the transceiver the HARQ feedback information transmitted within the transmission subframe from the UE, the HARQ feedback information being generated by the UE, wherein the transceiver is configured to receive and transmit data under the control of the processor.
